(19) Europäisches Patentamt
European Patent Office
Office européen des brevets

(11) EP 4 786 516 A1

(12) **EUROPEAN PATENT APPLICATION**
published in accordance with Art. 153(4) EPC

(43) Date of publication:
**05.08.2026 Bulletin 2026/32**

(21) Application number: **24872226.6**

(22) Date of filing: **25.09.2024**

(51) International Patent Classification (IPC):
***C08G 59/20*** *(2006.01)* ***C08G 59/68*** *(2006.01)*
***C09J 11/04*** *(2006.01)* ***C09J 11/06*** *(2006.01)*
***C09J 163/00*** *(2006.01)* ***C09J 183/04*** *(2006.01)*
***G02B 6/24*** *(2006.01)* ***G02B 6/30*** *(2006.01)*

(52) Cooperative Patent Classification (CPC):
**C08G 59/20; C08G 59/68; C09J 11/04; C09J 11/06; C09J 163/00; C09J 183/04; G02B 6/24; G02B 6/30**

(86) International application number:
**PCT/JP2024/034042**

(87) International publication number:
**WO 2025/070439 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023163620**

(71) Applicant: **Namics Corporation**
**Niigata-shi, Niigata 950-3131 (JP)**

(72) Inventors:
- **YAMADA Yoshito**
  **Niigata-shi, Niigata 950-3131 (JP)**
- **SAKAMOTO Takashi**
  **Niigata-shi, Niigata 950-3131 (JP)**

(74) Representative: **Becker, Eberhard**
**Becker Kurig & Partner**
**Patentanwälte mbB**
**Bavariastraße 7**
**80336 München (DE)**

(54) **RESIN COMPOSITION, CURED PRODUCT, AND OPTICAL FIBER ARRAY**

(57) Provided is a resin composition for an adhesive, the composition having a low refractive index and a low weight reduction rate after a reflow step is performed. The resin composition for an adhesive comprises: (A) a siloxane compound that has a reactive functional group; and (B) a polymerization initiator. The (B) polymerization initiator contains at least one onium salt selected from the group consisting of onium borate salts and onium gallate salts. The onium salt preferably contains at least one cation selected from the group consisting of iodonium and sulfonium.

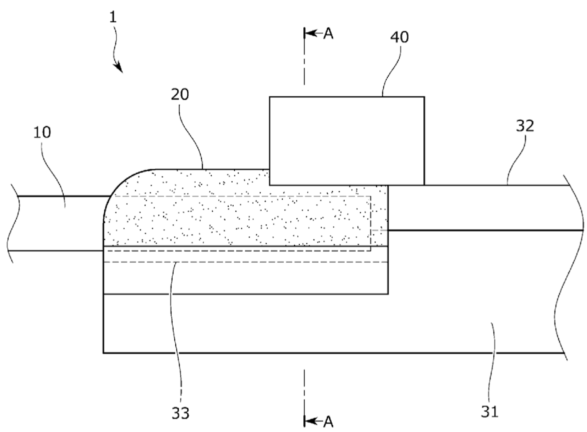


FIG. 3

EP 4 786 516 A1

## Description

### Technical Field

The present invention relates to a resin composition, a cured product, and an optical fiber array.

### Background Art

In recent years, the increasing communication speed in information communication and how to cope with the rapid growth in communication volume have become problems. As one solution to such problems, silicon photonics is attracting attention, which combines optical communication technology with conventional electrical communication technology.

Silicon photonics is a technology that integrates elements such as optical waveguides, optical switches, optical modulators, and photodetectors on a silicon substrate, and is a technology that realizes compact and high-performance optical apparatuses by integrating optical devices and electronic circuits as optical integrated circuits.

Conventionally, optical adhesives have been required to exhibit optical properties such as low refraction and high transparency. Generally, methods for achieving a low refractive index include lowering the glass transition temperature of resin compositions, and reducing the crosslinking density of polymers. Additionally, methods using fluorine compounds are also known for achieving a low refractive index. However, since fluorine compounds have very stable structures, fluorine compounds are less likely to decompose in the environment, which raises concerns about environmental problems and results in regulated use of such compounds.

For example, Patent Document 1 describes a low refractive index adhesive containing an acrylic matrix resin and porous hollow resin particles. The technology of Patent Document 1 focuses on porous hollow resin particles from the viewpoint of adhesiveness and transparency.

Further, Patent Document 2 describes the use of compounds having aromatic rings and reactive silicon-containing groups for an adhesive composition for optical communication that excels in adhesiveness, moisture resistance, and low refractive index. However, when resin materials having aromatic rings are used in large amounts, the refractive index becomes high, so only a refractive index exceeding 1.46, which is the refractive index of quartz glass used as a general optical fiber material, can be obtained.

### Related Art Documents

#### Patent Documents

Patent Document 1: Japanese Patent Application Laid-Open No. 2011-037978
Patent Document 2: Japanese Patent Application Laid-Open No. 2017-061599

## SUMMARY OF THE INVENTION

### Problem to be Solved by the Invention

In situations where resin compositions for adhesives or the like have diverse applications, a resin composition that excels in optical properties and heat resistance has been demanded.

For example, a resin composition for an adhesive that has a low refractive index and a small weight reduction rate after a reflow process has been demanded.

The present invention has been made in view of the above problems, and aims to provide a resin composition for an adhesive that has a low refractive index and a small weight reduction rate after a reflow process, and a cured product.

The present invention also aims to provide an optical fiber array using a resin composition for an adhesive that has a low refractive index and a small weight reduction rate after a reflow process.

### Means for Solving the Problem

The present invention relates to a resin composition for an adhesive, a cured product, and an optical fiber array shown below.

[1] A resin composition for an adhesive, the resin composition including:

(A) a siloxane compound having a reactive functional group; and
(B) a polymerization initiator,

wherein the (B) polymerization initiator includes at least one onium salt selected from the group consisting of onium borate salt and onium gallate salt.

[2] The resin composition according to [1] above, wherein the onium salt includes at least one cation selected from the group consisting of iodonium and sulfonium.

[3] The resin composition according to [1] or [2] above, wherein the onium gallate salt is an onium salt represented by the following general formula (1),

[Chemical Formula 1]

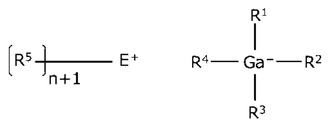

(1)

[in general formula (1), $R^1$ to $R^4$ each independently represent an alkyl group having 1 to 18 carbon atoms, an aryl group, or a group having a heterocycle, at least one of $R^1$ to $R^4$ is an aryl group, the number of carbon atoms in the aryl group (excluding the number of carbon atoms in substituents) is 6 to 14, and the aryl group may have a substituent,
E represents an element of valence n from Group 15 to Group 17 (IUPAC notation),
n is an integer of 1 to 3,
$R^5$ is an organic group bonded to E, the number of $R^5$ is n+1, the (n+1) $R^5$ may be the same as or different from each other, and 2 or more $R^5$ may form a ring structure including element E directly with each other or through -O-, -S-, -SO-, $-SO_2-$, -NH-, -CO-, -COO-, -CONH-, an alkylene group, or a phenylene group].

[4] The resin composition according to [1] or [2] above, wherein the onium borate salt is an onium salt represented by the following general formula (2),

[Chemical Formula 2]

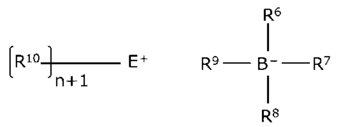

(2)

[in general formula (2), $R^6$ to $R^9$ are each independently an alkyl group having 1 to 18 carbon atoms or Ar, provided that at least one is Ar, and Ar is an aryl group having 6 to 14 carbon atoms (not including the number of carbon atoms of the following substituents), wherein some of hydrogen atoms in the aryl group may be substituted with an alkyl group having 1 to 18 carbon atoms, an alkyl group having 1 to 8 carbon atoms substituted with halogen atoms, an alkenyl group having 2 to 18 carbon atoms, an alkynyl group having 2 to 18 carbon atoms, an aryl group having 6 to 14 carbon atoms, a nitro group, a hydroxyl group, a cyano group, an alkoxy group or aryloxy group represented by $-OR^{11}$, an acyl group represented by $R^{12}CO-$, an acyloxy group represented by $R^{13}COO-$, an alkylthio group or arylthio group represented by $-SR^{14}$, an amino group represented by $-NR^{15}R^{16}$, or a halogen atom,
$R^{11}$ to $R^{14}$ are an alkyl group having 1 to 8 carbon atoms or an aryl group having 6 to 14 carbon atoms,
$R^{15}$ and $R^{16}$ are a hydrogen atom, an alkyl group having 1 to 8 carbon atoms, or an aryl group having 6 to 14 carbon atoms;
E represents an element of valence n from Group 15 to Group 17 (IUPAC notation),
n is an integer of 1 to 3,
$R^{10}$ is an organic group bonded to E, the number of $R^{10}$ is n+1, the (n+1) $R^{10}$ may be the same as or different from each other, and 2 or more $R^{10}$ may form a ring structure including element E directly with each other or through -O-, -S-, -SO-, $-SO_2-$, -NH-, -CO-, -COO-, -CONH-, an alkylene group, or a phenylene group].

[5] The resin composition according to any one of [1] to [4] above, wherein the (B) polymerization initiator has a content of 0.3 parts by mass to 20.0 parts by mass relative to 100 parts by mass of the (A) siloxane compound having a reactive

functional group.

[6] The resin composition according to any one of [1] to [5] above, wherein the (A) siloxane compound having a reactive functional group includes (A1) a cyclic siloxane compound having a reactive functional group and (A2) a linear siloxane compound having a reactive functional group.

[7] The resin composition according to any one of [1] to [6] above, further including (C) an inorganic filler.

[8] The resin composition according to any one of [1] to [7] above, further including (D) oxetane.

[9] A cured product of the resin composition according to any one of [1] to [8] above.

[10] The cured product according to [9] above, wherein a refractive index at a wavelength of 1310 nm is 1.47 or less.

[11] The cured product according to [9] or [10] above, wherein a transmittance of the cured product at a thickness of 100 $\mu$m and a wavelength of 1310 nm is 85% or more.

[12] The cured product according to any one of [9] to [11] above, wherein an absolute value of a weight reduction rate before and after heating at 260°C represented by the following formula (1) is 16% or less,

[Formula 1]

$$Weight\ reduction\ rate = \left|\frac{weight\ after\ heating - weight\ before\ heating}{weight\ before\ heating} \times 100\right| (\%) \quad (1) \ .$$

[13] The resin composition according to any one of [1] to [8] above, used for fixing an optical fiber to a groove portion formed in an optical waveguide element.

[14] The resin composition according to any one of [1] to [8] above, used for optical path coupling of an optical fiber to an optical waveguide element.

[15] The resin composition according to any one of [1] to [8] above, used for simultaneously performing fixing of an optical fiber to a groove portion formed in an optical waveguide element and optical path coupling of the optical fiber to the optical waveguide element.

[16] An optical fiber array, including:

the resin composition according to any one of [1] to [15] above;
an optical fiber; and
an optical waveguide element,
wherein the optical fiber is coupled by an optical path to the optical waveguide element by the resin composition.

Effects of the Invention

According to the present invention, it is possible to provide a resin composition for an adhesive that has a low refractive index and a small weight reduction rate after a reflow process, and a cured product of the resin composition.

Further, according to the present invention, it is possible to provide an optical fiber array using a resin composition for an adhesive that has a low refractive index and a small weight reduction rate after a reflow process.

BRIEF DESCRIPTION OF THE DRAWINGS

[FIG. 1] is an exploded perspective view of the optical waveguide module.
[FIG. 2] is an enlarged view of the vicinity of the connection portion.
[FIG. 3] is a side view showing a state in which the optical fiber is fixed to the optical waveguide element.
[FIG. 4] is a cross-sectional view taken along line A-A of FIG. 3.

DESCRIPTION OF THE EMBODIMENTS

Hereinafter, an embodiment of the present invention (hereinafter, the present embodiment) will be described.

The present embodiment relates to a resin composition for an adhesive, a cured product of the resin composition, and an optical fiber array.

It is noted that the present invention is not limited by the present embodiment. In addition, the drawings are schematic, and the present invention can be implemented in forms with various modifications and improvements based on the knowledge of those skilled in the art. In this specification and the drawings, components with the same reference numerals indicate the same elements.

[Definition]

In this specification, ◦ to △ (for example, ◦ parts by mass to △ parts by mass) means ◦ or more and △ or less (◦ parts by mass or more and △ parts by mass or less).
Further, in this specification, the term "include" or "including" means to include the specified component, but does not exclude the presence of other components.

[Resin Composition]

A resin composition of the present embodiment is for an adhesive and includes (A) a siloxane compound having a reactive functional group and (B) a polymerization initiator, wherein the (B) polymerization initiator includes at least one onium salt selected from the group consisting of onium borate salt and onium gallate salt.

(A) Siloxane Compound Having Reactive Functional Group

The (A) siloxane compound having a reactive functional group included in the resin composition of the present embodiment is not particularly limited, but it is preferable to include (A1) a cyclic siloxane compound having a reactive functional group and (A2) a linear siloxane compound having a reactive functional group.
Hereinafter, the (A) siloxane compound having a reactive functional group may be simply referred to as "(A) siloxane compound" or "(A) component".

(A1) Cyclic Siloxane Compound Having Reactive Functional Group

The resin composition of the present embodiment includes (A1) a cyclic siloxane compound having a reactive functional group (hereinafter also referred to as "(A1) component" or "(A1) cyclic siloxane compound") as the (A) siloxane compound having a reactive functional group.
(A1) Component is not particularly limited as long as (A1) component is a cyclic siloxane compound having 1 or more reactive functional groups in one molecule.
As (A1) component, one type may be used alone, or two or more types may be used in combination.
The reactive functional group means a functional group that can react with functional groups possessed by compounds included in the resin composition of the present embodiment.
The reactive functional group is not particularly limited, but examples include epoxy group, oxetanyl group, glycidyl group, alkoxysilyl group, and vinyl ether group.
The number of reactive functional groups per molecule in (A1) component is not particularly limited as long as the number is 1 or more, but from the viewpoint of optical properties, heat resistance, availability of raw materials, and reactivity, the number is 2 or more, preferably 2 to 10, more preferably 2 to 6, even more preferably 2 to 4, and particularly preferably 2 or 4.
The cyclic siloxane compound means a compound having a cyclic siloxane skeleton based on siloxane bonds (-Si-O-Si-).
The number of Si-O units forming the cyclic siloxane skeleton (equal to the number of silicon atoms forming the siloxane ring) is not particularly limited, but from the viewpoint of optical properties, heat resistance, availability of raw materials, and reactivity, the number is preferably 2 to 15, more preferably 3 to 10, even more preferably 3 to 8, and particularly preferably 3 to 6.
It is preferable that (A1) component has a cationic polymerizable group as the reactive functional group bonded to the cyclic siloxane skeleton. The cationic polymerizable group means a functional group that polymerizes in a chain manner in the presence of cations.
Since (A1) component has a cationic polymerizable group bonded to the cyclic siloxane skeleton, it is possible to reduce curing shrinkage while having heat resistance.
Examples of the cationic polymerizable group include epoxy group, glycidyl group, oxetanyl group, and vinyl ether group.
Although not particularly limited, from the viewpoint of lowering the refractive index, it is preferable that the cationic polymerizable group is a functional group having no aromatic ring.
From the viewpoint of optical properties, heat resistance, availability of raw materials, and storage stability of the composition, it is preferable that the cationic polymerizable group of (A1) component is an epoxy group.
The epoxy group is a group having an oxirane structure and is a substituent having a three-membered ring (oxirane ring) composed of two carbon atoms and one oxygen atom.
In the case of the cationic polymerizable group being an epoxy group, the epoxy group may be an alicyclic epoxy group or a non-alicyclic epoxy group.

From the viewpoint of achieving excellent transparency, it is preferable that the epoxy group is an alicyclic epoxy group.

The alicyclic epoxy group has a cycloalkene oxide structure as an alicyclic skeleton.

The cycloalkene oxide structure is a structure having an aliphatic ring and an epoxy group composed of two adjacent carbon atoms constituting the aliphatic ring and an oxygen atom. The cycloalkene oxide structure can be obtained, for example, by epoxidizing a cycloalkene with an oxidizing agent such as peroxide.

The alicyclic skeleton that the alicyclic epoxy group has is not particularly limited, but examples include cyclopropane skeleton, cyclobutane skeleton, cyclopentane skeleton, cyclohexane skeleton, cycloheptane skeleton, cyclooctane skeleton, and the like, with cyclohexane skeleton being preferable.

The non-alicyclic epoxy group is an epoxy group other than the above alicyclic epoxy group. Examples of groups containing a non-alicyclic epoxy group include glycidyl group and glycidoxypropyl group (preferably 3-glycidoxypropyl group).

In (A1) component, the epoxy group may be directly bonded to the cyclic siloxane skeleton or may be bonded via a linking group.

The linking group may be a divalent group, and examples include alkylene group ($-(CH_2)_n-$(n is an integer of 0 or more)), ether bond (-O-), combinations of these, and the like.

Although the epoxy group and the cyclic siloxane skeleton are close to each other, a dense cured product tends to be obtained when the resin composition is cured, resulting in excellent heat resistance (reflow resistance).

Accordingly, in the case of the epoxy group being bonded to the cyclic siloxane skeleton via a linking group, the number of atoms present between the epoxy group and the cyclic siloxane skeleton is preferably 4 or less, and more preferably 2 or less.

The weight average molecular weight of (A1) component is preferably 200 to 3,000, more preferably 300 to 2,000, and particularly preferably 400 to 1,000.

In the case of the weight average molecular weight of (A1) component being within the above range, the resin composition has an appropriate viscosity, and the balance between optical properties and heat resistance of the cured product is favorable.

The weight average molecular weight in this specification refers to a value calculated using a calibration curve based on standard polystyrene by gel permeation chromatography (GPC).

The functional group equivalent (g/mol) of (A1) component is not particularly limited, but from the viewpoint of reactivity, the functional group equivalent is preferably 50 to 1,000, more preferably 100 to 500, and particularly preferably 150 to 400.

The epoxy equivalent in this specification refers to a value measured in accordance with JIS K7236.

The content of (A1) component in the resin composition is not particularly limited, but from the viewpoint of improving reflow resistance, the content is preferably 0.1 parts by mass or more, more preferably 0.5 parts by mass or more, even more preferably 2.0 parts by mass or more, and particularly preferably 5 parts by mass or more, in the case of the total amount of the resin composition being 100 parts by mass.

Further, from the viewpoint of achieving low refractive index and high transparency, the content of (A1) component in the resin composition is preferably 95 parts by mass or less, more preferably 50 parts by mass or less, even more preferably 30 parts by mass or less, and particularly preferably 15 parts by mass or less, in the case of the total amount of the resin composition being 100 parts by mass.

(A1) Component is preferably liquid at 25°C, but may be solid at room temperature.

From the viewpoint of preparation and dispensability of the resin composition, (A1) component preferably has a viscosity at 25°C of 10 mPa·s to 10,000 mPa·s, more preferably 20 mPa·s to 8,000 mPa·s, and particularly preferably 50 mPa·s to 5,000 mPa·s.

In this specification, unless otherwise specified, viscosity is expressed as a value measured in accordance with Japanese Industrial Standard JIS K6833. Specifically, viscosity can be determined by measurement using an E-type viscometer at a rotation speed of 10 rpm.

As (A1) component, for example, a compound represented by the following general formula (3) can be used.

[Chemical Formula 3]

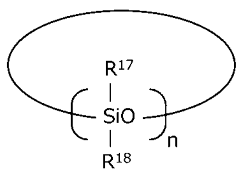

(3)

[In general formula (3), $R^{17}$ or $R^{18}$ represents a glycidyl group, an epoxy group, or a hydrocarbon group having 1 to 6 carbon atoms, and n represents an integer of 3 to 10. Multiple $R^{17}$ and $R^{18}$ present in the formula may be the same as or different from each other. However, among the multiple $R^{17}$ or $R^{18}$, at least two are organic groups containing a glycidyl group or an epoxycyclohexylethyl group.]

Examples in the case where (A1) component is a cyclic siloxane compound having an epoxy group include, for example, 2,4-di[2-(3-{oxabicyclo[4.1.0]heptyl})ethyl]-2,4,6,6,8,8-hexamethyl-cyclotetrasiloxane, 4,8-di[2-(3-{oxabicyclo[4.1.0]heptyl})ethyl]-2,2,4,6,6,8-hexamethyl-cyclotetrasiloxane, 2,4-di[2-(3-{oxabicyclo[4.1.0]heptyl})ethyl]-6,8-dipropyl-2,4,6,8-tetramethyl-cyclotetrasiloxane, 4,8-di[2-(3-{oxabicyclo[4.1.0]heptyl})ethyl]-2,6-dipropyl-2,4,6,8-tetramethyl-cyclotetrasiloxane, 2,4,8-tri[2-(3-{oxabicyclo[4.1.0]heptyl})ethyl]-2,4,6,6,8-pentamethyl-cyclotetrasiloxane, 2,4,8-tri[2-(3-{oxabicyclo[4.1.0]heptyl})ethyl]-6-propyl-2,4,6,8-tetramethyl-cyclotetrasiloxane, and 2,4,6,8-tetra[2-(3-{oxabicyclo[4.1.0]heptyl})ethyl]-2,4,6,8-tetramethyl-cyclotetrasiloxane.

Commercial products in the case where (A1) component is a cyclic siloxane compound having an epoxy group are not particularly limited, but examples include KR-470 (4 functional groups), X-40-2670 (4 functional groups), and X-40-2678 (2 functional groups) (all manufactured by Shin-Etsu Chemical Co., Ltd.), which are cyclic siloxane compounds having alicyclic epoxy groups, and X-40-2701 (4 functional groups) (manufactured by Shin-Etsu Chemical Co., Ltd.), X-40-2728 (2 functional groups) (manufactured by Shin-Etsu Chemical Co., Ltd.), and EP-3400L (4 functional groups) (manufactured by ADEKA), which are cyclic siloxane compounds having glycidyl groups that are non-alicyclic epoxy groups.

It is preferable that (A1) component is an epoxy-modified cyclic siloxane compound having these 2 or 4 epoxy groups.

As (A1) component, one type of these may be used, or two or more types may be used in combination.

The epoxy equivalent (g/mol) of (A1) cyclic siloxane compound is not particularly limited, but from the viewpoint of reactivity, the epoxy equivalent is preferably 50 to 1000, more preferably 100 to 500, and even more preferably 150 to 400. In this specification, the epoxy equivalent can be measured in accordance with JIS K7236.

The weight average molecular weight of (A1) cyclic siloxane compound is not particularly limited, but is, for example, preferably 200 to 3000, more preferably 300 to 2000, and even more preferably 400 to 1000. In the case of the weight average molecular weight of (A1) cyclic siloxane compound being within the above range, the composition has an appropriate viscosity and workability is improved. In this specification, the weight average molecular weight can be calculated using a calibration curve based on standard polystyrene by gel permeation chromatography (GPC).

(A1) Cyclic siloxane compound is preferably liquid at room temperature (25°C), but may be solid. The viscosity of (A1) cyclic siloxane compound at 25°C is preferably 10 mPa·s to 30000 mPa·s from the viewpoint of workability. In this specification, viscosity can be measured in accordance with Japanese Industrial Standard JIS K6833. Specifically, viscosity can be determined by measurement using an E-type viscometer at a rotation speed of 10 rpm. There are no particular restrictions on the equipment, rotor, or measurement range to be used.

(A2) Linear Siloxane Compound Having Reactive Functional Group

The resin composition of the present embodiment includes (A2) a linear siloxane compound having a reactive functional group (hereinafter also referred to as "(A2) component" or "(A2) linear siloxane compound") as the (A) siloxane compound having a reactive functional group.

(A2) Component is not particularly limited as long as (A2) component is a linear siloxane compound having 1 or more reactive functional groups in one molecule.

As (A2) component, one type may be used alone, or two or more types may be used in combination.

The reactive functional group that (A2) component has is the same as (A1) component and is not particularly limited, but examples include epoxy group, glycidyl group, oxetanyl group, alkoxysilyl group, vinyl ether group, and alkoxyl group.

Further, it is preferable that (A2) component has a cationic polymerizable group as the reactive functional group. The cationic polymerizable group means a functional group that polymerizes in a chain manner in the presence of cations.

Since (A2) component has a cationic polymerizable group bonded to a linear siloxane skeleton, it is possible to reduce curing shrinkage while having low refractive index.

Examples of the cationic polymerizable group include epoxy group, glycidyl group, oxetanyl group, and vinyl ether group.

Although not particularly limited, from the viewpoint of lowering the refractive index, it is preferable that the cationic polymerizable group is a functional group having no aromatic ring.

The number of reactive functional groups per molecule in (A2) component is not particularly limited as long as the number is 1 or more, but from the viewpoint of optical properties, heat resistance, availability of raw materials, and reactivity, the number is 2 or more, preferably 2 to 10, more preferably 2 to 6, even more preferably 2 to 4, and particularly preferably 2.

The linear siloxane compound means a compound having a linear siloxane skeleton based on siloxane bonds (-Si-O-Si-).

The number of Si-O units forming the linear siloxane skeleton (equal to the number of silicon atoms forming the siloxane chain) is not particularly limited, but from the viewpoint of optical properties, heat resistance, availability of raw materials, and reactivity, the number is preferably 2 to 50, more preferably 3 to 40, even more preferably 5 to 30, and particularly preferably 10 to 20.

From the viewpoint of optical properties, heat resistance, and adhesiveness, it is preferable that the cationic polymerizable group of (A2) component is an epoxy group.

It is preferable that (A2) component has 1 or more epoxy groups in the molecule.

In the case of the cationic polymerizable being an epoxy group, similar to (A1) component, the epoxy group may be an alicyclic epoxy group or a non-alicyclic epoxy group.

From the viewpoint of achieving excellent transparency, it is preferable that the epoxy group is an alicyclic epoxy group.

In (A2) component, the epoxy group may be directly bonded to the linear siloxane skeleton or may be bonded via a linking group.

The linking group may be a divalent group, and examples include alkylene group ($-(CH_2)_n-$(n is an integer of 0 or more)), ether bond (-O-), combinations of these, and the like.

Although the epoxy group and the linear siloxane skeleton are close to each other, a dense cured product tends to be obtained when the resin composition is cured, resulting in excellent heat resistance (reflow resistance).

Accordingly, in the case of the epoxy group being bonded to the linear siloxane skeleton via a linking group, the number of atoms present between the epoxy group and the linear siloxane skeleton is preferably 4 or less, and more preferably 2 or less.

The weight average molecular weight of (A2) component is preferably 200 to 10,000, more preferably 200 to 8,000, and particularly preferably 400 to 6,000.

In the case of the weight average molecular weight of (A2) component being within the above range, the resin composition has an appropriate viscosity, and the balance between optical properties and heat resistance of the cured product is favorable.

The functional group amount (g/mol) of (A2) component is not particularly limited, but from the viewpoint of reactivity, it is preferably 300 to 5,000, more preferably 350 to 3,000, even more preferably 400 to 2,700, and particularly preferably 400 to 1,500.

The content of (A2) component in the resin composition is not particularly limited, but from the viewpoint of achieving low refractive index and high transparency, the content is preferably 1 part by mass or more, more preferably 5 parts by mass or more, even more preferably 10 parts by mass or more, and particularly preferably 20 parts by mass or more, in the case of the total amount of the resin composition being 100 parts by mass.

Further, from the viewpoint of improving reflow resistance, the content of (A2) component in the resin composition is preferably 60 parts by mass or less, more preferably 50 parts by mass or less, even more preferably 40 parts by mass or less, and particularly preferably 35 parts by mass or less, in the case of the total amount of the resin composition being 100 parts by mass.

(A2) Component is preferably liquid at 25°C, but may be solid at room temperature.

From the viewpoint of preparation and dispensability of the resin composition, (A2) component preferably has a viscosity at 25°C of 1 mPa·s to 500 mPa·s, more preferably 2 mPa·s to 300 mPa·s, and particularly preferably 5 mPa·s to 100 mPa·s.

Examples in the case where (A2) component is a linear siloxane compound having an epoxy group include, for example, a linear siloxane compound having epoxy groups at the ends.

The linear siloxane compound having epoxy groups at the ends means a compound having alicyclic epoxy groups or non-alicyclic epoxy groups at the ends of the main chain formed by siloxane bonds.

(A2) Component may have epoxy groups at least at any of the ends of the main chain, but preferably has epoxy groups at all ends of the main chain (both ends of the main chain in the case where the main chain is not branched).

(A2) Component may have epoxy groups in the side chains in addition to the ends of the main chain, but preferably has epoxy groups only at the ends of the main chain.

(A2) Component having glycidyl ether structures at both ends is particularly preferable from the viewpoint of optical properties and adhesiveness.

As (A2) component, for example, a compound represented by the following general formula (4) can be used.

[Chemical Formula 4]

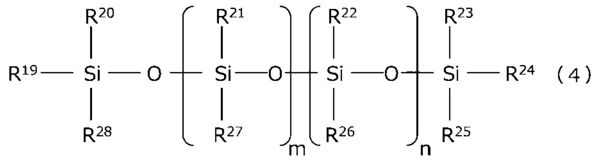

[In general formula (4), $R^{20}$ to $R^{23}$ and $R^{25}$ to $R^{28}$ each independently represent a hydrocarbon group or an organic group containing a glycidyl group. $R^{19}$ and $R^{24}$ each independently represent an organic group containing a glycidyl group. m indicates the number of moles of siloxane units represented by -[Si($R^{21}$)($R^{27}$)O]- in one molecule, and is a number of 0 to 3000. n indicates the number of moles of siloxane units represented by -[Si($R^{22}$)($R^{26}$)O]- in one molecule, and is a number of 0 to 3000.]

Examples in the case where (A2) component is a linear siloxane compound having alicyclic epoxy groups or non-alicyclic epoxy groups at the ends are not particularly limited, but include, for example, modified silicone oil.

Commercially available modified silicone oils are not particularly limited, but include, for example, X-22-169B and X-22-169AS which are modified silicone oils having alicyclic epoxy groups at both ends, X-22-163, KF-105, X-22-163A, X-22-163B, and X-22-163C which are modified silicone oils having epoxy groups at both ends, X-22-2046 and KF-102 which are modified silicone oils having alicyclic epoxy groups in side chains, X-22-343, KF-101, KF-1001, and X-22-2000 which are modified silicone oils having epoxy groups in side chains, and X-22-9002 which is a modified silicone oil having epoxy groups at both ends and in side chains (all manufactured by Shin-Etsu Chemical Co., Ltd.).

(A2) Component is preferably a modified silicone oil.

As (A2) component, one type of these may be used, or two or more types may be used in combination.

The epoxy equivalent (g/mol) of (A2) linear siloxane compound is not particularly limited, but from the viewpoint of reactivity, the epoxy equivalent is preferably 100 to 4000, more preferably 120 to 2000, and even more preferably 150 to 1000.

The weight average molecular weight of (A2) linear siloxane compound is not particularly limited, but is, for example, preferably 200 to 10000, more preferably 200 to 8000, and even more preferably 400 to 6000. In the case of the weight average molecular weight of (A2) linear siloxane compound being within the above range, the composition has an appropriate viscosity and workability is improved.

(A2) Linear siloxane compound is preferably liquid at room temperature (25°C), but may be solid. From the viewpoint of workability, the viscosity of (A2) linear siloxane compound at 25°C is preferably 1 mPa·s to 500 mPa·s, more preferably 2 mPa·s to 300 mPa·s, and even more preferably 5 mPa·s to 100 mPa·s.

Blending Ratio of (A1) Component and (A2) Component

In the (A) siloxane compound contained in the resin composition, (A1) cyclic siloxane compound having a reactive functional group contributes to lowering the refractive index and improving heat resistance.

In addition, (A2) linear siloxane compound having a reactive functional group contributes to lowering the refractive index by reducing the crosslinking density of the cured product and achieving excellent transparency.

Therefore, (A) siloxane compound contains both (A1) component and (A2) component.

In this case, the ratio (mass ratio) of (A) siloxane compound, and (A1) component and (A2) component is 100:0 to 0:100, and may be 90:10 to 10:90, 85:15 to 5:95, 75:25 to 15:85, 70:25 to 25:75, 65:35 to 35:65, 60:40 to 30:70, 55:45 to 25:75, or 50:50 to 20:80.

The content of (A) component in the resin composition of the present embodiment is preferably 5 parts by mass to 99 parts by mass, more preferably 10 parts by mass to 70 parts by mass, even more preferably 20 parts by mass to 60 parts by mass, and particularly preferably 30 parts by mass to 50 parts by mass, in the case of the total amount of the resin composition being 100 parts by mass. By setting the content of (A) component within the above range, the refractive index can be lowered, and adhesiveness can be improved.

(B) Polymerization Initiator

The resin composition of the present embodiment includes (B) a polymerization initiator (hereinafter also referred to as "(B) component"), and the (B) polymerization initiator includes at least one onium salt selected from the group consisting of onium borate salt and onium gallate salt.

As (B) component, one type may be used alone, or two or more types may be used in combination.

(B) Component of the present embodiment is a photopolymerization initiator.

In the case where the reactive functional group included in (A) component is a cationic polymerizable groups, it is preferable to use a photoacid generator as the photopolymerization initiator.

The photoacid generator is a compound that generates acid by irradiation with active energy rays.

Due to the catalytic effect of the acid generated from the photoacid generator, cationic polymerization proceeds between the cationic polymerizable groups included in (A) component.

In other words, (B) component is a compound that generates acid for curing (A1) component and (A2) by irradiation with active energy rays.

Here, active energy rays include all light in a broad sense such as radiation like α-rays and β-rays, electromagnetic waves like γ-rays and X-rays, electron beams (EB), ultraviolet light of about 100 nm to 400 nm, and visible light of about 400 nm to 800 nm, with ultraviolet light being preferable.

From the viewpoint of achieving low refractive index and excellent heat resistance, an onium salt is used as (B) component of the present embodiment. The onium salt is a salt compound of onium ions and anions. The onium salt undergoes photoreaction to release Lewis acid or Brønsted acid (protonic acid).

From the viewpoint of achieving low refractive index and excellent heat resistance, it is preferable that the onium salt includes at least one onium salt selected from the group consisting of onium borate salt and onium gallate salt.

In this case, it is preferable that the onium salt includes at least one cation selected from the group consisting of iodonium and sulfonium.

The onium gallate salt is not particularly limited, but an onium salt represented by the following general formula (1) can be used.

[Chemical Formula 5]

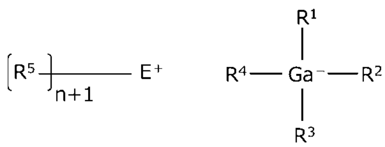
(1)

[In general formula (1), $R^1$ to $R^4$ each independently represent an alkyl group having 1 to 18 carbon atoms, an aryl group, or a group having a heterocycle, at least one of $R^1$ to $R^4$ is an aryl group, the number of carbon atoms in the aryl group (excluding the number of carbon atoms in substituents) is 6 to 14, and the aryl group may have a substituent,
E represents an element of valence n from Group 15 to Group 17 (IUPAC notation),
n is an integer of 1 to 3,
$R^5$ is an organic group bonded to E, the number of $R^5$ is n+1, the (n+1) $R^5$ may be the same as or different from each other, and 2 or more $R^5$ may form a ring structure including element E directly with each other or through -O-, -S-, -SO-, $-SO_2-$, -NH-, -CO-, -COO-, -CONH-, an alkylene group, or a phenylene group.]

The onium gallate salt is not particularly limited as long as the onium gallate salt has a cation including a gallium atom. Further, the onium gallate salt may include an anion having a tetraphenyl gallate skeleton, and the hydrogen atoms of the phenyl group in the tetraphenyl gallate skeleton may be substituted with at least one halogen atom selected from the group consisting of fluorine atom, chlorine atom, bromine atom, and iodine atom. The anion having a tetraphenyl gallate skeleton is preferably tetrakis(pentafluorophenyl)gallate.

The onium gallate salt can be synthesized, for example, based on the method described in Japanese Patent Application Laid-Open No. 2017-048325.

Examples of the onium gallate salt include 4-isopropyl-4'-methyldiphenyliodonium tetrakis(pentafluorophenyl) gallate, triarylsulfonium-tetrakis(pentafluorophenyl)gallate, diphenyl[4-(phenylthio)phenyl]sulfonium tetrakis(pentafluorophenyl)gallate, and 4-isopropylphenyl(p-tolyl)iodonium tetrakis(pentafluorophenyl)gallate, but are not limited to these compounds.

The onium borate salt is not particularly limited, but an onium salt represented by the following general formula (2) can be used.

[Chemical Formula 6]

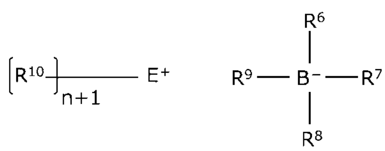
(2)

[In general formula (2), $R^6$ to $R^9$ are each independently an alkyl group having 1 to 18 carbon atoms or Ar, provided that at least one is Ar, and Ar is an aryl group having 6 to 14 carbon atoms (not including the number of carbon atoms of the following substituents), wherein some of the hydrogen atoms in the aryl group may be substituted with an alkyl group having 1 to 18 carbon atoms, an alkyl group having 1 to 8 carbon atoms substituted with halogen atoms, an alkenyl group having 2 to 18 carbon atoms, an alkynyl group having 2 to 18 carbon atoms, an aryl group having 6 to 14 carbon atoms, a nitro group, a hydroxyl group, a cyano group, an alkoxy group or aryloxy group represented by $-OR^{11}$, an acyl group represented by $R^{12}CO-$, an acyloxy group represented by $R^{13}COO-$, an alkylthio group or arylthio group represented by $-SR^{14}$, an amino group represented by $-NR^{15}R^{16}$, or a halogen atom,

$R^{11}$ to $R^{14}$ are an alkyl group having 1 to 8 carbon atoms or an aryl group having 6 to 14 carbon atoms,

$R^{15}$ and $R^{16}$ are a hydrogen atom, an alkyl group having 1 to 8 carbon atoms, or an aryl group having 6 to 14 carbon atoms;

E represents an element of valence n from Group 15 to Group 17 (IUPAC notation),

n is an integer of 1 to 3,

$R^{10}$ is an organic group bonded to E, the number of $R^{10}$ is n+1, the (n+1) $R^{10}$ may be the same as or different from each other, and 2 or more $R^{10}$ may form a ring structure including element E directly with each other or through -O-, -S-, -SO-, $-SO_2-$, -NH-, -CO-, -COO-, -CONH-, an alkylene group, or a phenylene group.]

The onium borate salt is not particularly limited as long as the onium borate salt has a cation including a boron atom. Further, the onium borate salt may include an anion having a tetraphenylborate skeleton, and the hydrogen atoms of the phenyl group in the tetraphenylborate skeleton may be substituted with at least one halogen atom selected from the group consisting of fluorine atom, chlorine atom, bromine atom, and iodine atom. The anion having a tetraphenylborate skeleton is preferably tetrakis(pentafluorophenyl)borate.

The onium borate salt can be synthesized, for example, based on the method described in Japanese Patent Application Laid-Open No. 2014-205624.

Specific examples of the onium borate salt include 4-isopropyl-4'-methyldiphenyliodonium tetrakis(pentafluorophenyl)borate, triarylsulfonium-tetrakis(pentafluorophenyl)borate, triphenylsulfonium tetrakis(pentafluorophenyl)borate, triphenylsulfonium tetraphenylborate, 4-t-butylphenyl-diphenylsulfonium tetrakis(pentafluorophenyl)borate, 4-t-butylphenyl-diphenylsulfonium tetraphenylborate, diphenyl[4-(phenylthio)phenyl]sulfonium tetrakis(pentafluorophenyl)borate, diphenyl[4-(phenylthio)phenyl]sulfonium tetraphenylborate, [4-(4-biphenylylthio)phenyl]-4-biphenylylphenylsulfonium tetrakis(pentafluorophenyl)borate, [4-(4-biphenylylthio)phenyl]-4-biphenylylphenylsulfonium tetraphenylborate, (2-methyl)phenyl[4-(4-biphenylylthio)phenyl]4-biphenylylsulfonium tetrakis(pentafluorophenyl)borate, (2-methyl)phenyl [4-(4-biphenylylthio)phenyl]4-biphenylylsulfonium tetraphenylborate, [4-(4-biphenylylthio)-3-methylphenyl]4-biphenylylphenylsulfonium tetrakis(pentafluorophenyl)borate, [4-(4-biphenylylthio)-3-methylphenyl]4-biphenylylphenylsulfonium tetraphenylborate, (2-methyl)phenyl[4-(4-biphenylylthio)-3-methylphenyl]4-biphenylylsulfonium tetrakis(pentafluorophenyl)borate, (2-methyl)phenyl[4-(4-biphenylylthio)-3-methylphenyl]4-biphenylylsulfonium tetraphenylborate, (2-methoxy)phenyl[4-(4-biphenylylthio)-3-methoxyphenyl]4-biphenylylsulfonium tetrakis(pentafluorophenyl)borate, (2-methoxy)phenyl[4-(4-biphenylylthio)-3-methoxyphenyl]4-biphenylylsulfonium tetraphenylborate, (2-ethoxy)phenyl[4-(4-biphenylylthio)-3-ethoxyphenyl]4-biphenylylsulfonium tetrakis(pentafluorophenyl)borate, (2-ethoxy)phenyl[4-(4-biphenylylthio)-3-ethoxyphenyl]4-biphenylylsulfonium tetraphenylborate, (2-butoxy)phenyl[4-(4-biphenylylthio)-3-butoxyphenyl] 4-biphenylylsulfonium tetrakis(pentafluorophenyl)borate, (2-butoxy)phenyl[4-(4-biphenylylthio)-3-butoxyphenyl]4-biphenylylsulfonium tetraphenylborate, tris[4-(4-acetylphenylsulfanyl)phenyl]sulfonium tetrakis(pentafluorophenyl)borate, tris[4-(4-acetylphenylsulfanyl)phenyl]sulfonium methanesulfonate, tris[4-(4-acetylphenylsulfanyl)phenyl]sulfonium butanesulfonate, tris[4-(4-acetylphenylsulfanyl)phenyl]sulfonium octanesulfonate, tris[4-(4-acetylphenylsulfanyl)phenyl]sulfonium tetraphenylborate, tris[4-(4-acetylphenylsulfanyl)phenyl]sulfonium p-toluenesulfonate, tris[4-(4-acetylphenylsulfanyl)phenyl]sulfonium 10-camphorsulfonate, tris[4-(4-acetyl-3-methylphenylthio)phenyl]sulfonium trifluoromethanesulfonate, tris[4-(4-acetyl-3-methylphenylthio)phenyl]sulfonium nonafluorobutanesulfonate, tris[4-(4-acetyl-3-methylphenylthio)phenyl]sulfonium heptadecafluorooctanesulfonate, tris[4-(4-acetyl-3-methylphenylthio)phenyl]sulfonium tetrakis(pentafluorophenyl)borate, tris[4-(4-acetyl-3-methylphenylthio)phenyl]sulfonium methanesulfonate, tris[4-(4-acetyl-3-methylphenylthio)phenyl]sulfonium butanesulfonate, tris[4-(4-acetyl-3-methylphenylthio)phenyl]sulfonium octanesulfonate, tris[4-(4-acetyl-3-methylphenylthio)phenyl]sulfonium tetraphenylborate, tris[4-(4-acetyl-3-methylphenylthio) phenyl]sulfonium p-toluenesulfonate, tris[4-(4-acetyl-3-methylphenylthio)phenyl]sulfonium 10-camphorsulfonate, tris [4-(4-acetyl-3-ethylphenylthio)phenyl]sulfonium trifluoromethanesulfonate, tris[4-(4-acetyl-3-ethylphenylthio)phenyl] sulfonium nonafluorobutanesulfonate, tris[4-(4-acetyl-3-ethylphenylthio)phenyl]sulfonium heptadecafluorooctanesulfonate, tris[4-(4-acetyl-3-ethylphenylthio)phenyl]sulfonium tetrakis(pentafluorophenyl)borate, tris[4-(4-acetyl-3-ethylphenylthio)phenyl]sulfonium methanesulfonate, tris[4-(4-acetyl-3-ethylphenylthio)phenyl]sulfonium butanesulfonate, tris [4-(4-acetyl-3-ethylphenylthio)phenyl]sulfonium octanesulfonate, tris[4-(4-acetyl-3-ethylphenylthio)phenyl]sulfonium tetraphenylborate, tris[4-(4-acetyl-3-ethylphenylthio)phenyl]sulfonium p-toluenesulfonate, tris[4-(4-acetyl-3-ethylphenylthio)phenyl]sulfonium 10-camphorsulfonate, tris[4-(4-acetyl-3-butylphenylthio)phenyl]sulfonium trifluoromethanesulfonate, tris[4-(4-acetyl-3-butylphenylthio)phenyl]sulfonium nonafluorobutanesulfonate, tris[4-(4-acetyl-3-butylphenylthio)phenyl]sulfonium heptadecafluorooctanesulfonate, and tris[4-(4-acetyl-3-butylphenylthio)phenyl]sulfonium tetrakis(pentafluorophenyl)borate, but are not limited to these compounds.

The content of (B) component in the resin composition is not particularly limited, but from the viewpoint of polymerizability and the viewpoint of making the cured product have a low refractive index and excel in heat resistance, the content is 0.05 parts by mass to 30 parts by mass, preferably 0.1 parts by mass to 20 parts by mass, more preferably 0.2 parts by mass to 10 parts by mass, and even more preferably 0.3 parts by mass to 5 parts by mass, relative to 100 parts by mass of (A) siloxane compound having a reactive functional group. It should be noted that from the viewpoint of reducing the weight reduction rate after a reflow process, a smaller amount of (B) component is preferable. In the case of (A) component being a siloxane compound having a reactive functional group, a large amount of (B) component results in generation of excessive acid, and the generated acid may promote decomposition of the siloxane compound during reflow.

The content of (B) component may be appropriately designed by considering various factors such as the type and properties of the polymerizable compound, the type and irradiation amount of active energy rays (in the case of using active energy rays), heating temperature, curing time, humidity, and thickness of the resin composition, and is not limited to the above range.

[Other Optional Components]

The resin composition of the present embodiment may contain optional components other than the above (A) component and (B) component, such as the components described below, as needed, within a range that does not impair the spirit of the present embodiment.

(C) Inorganic Filler

The resin composition of the present embodiment may include (C) an inorganic filler (hereinafter also referred to as "(C) component") as an optional component.

(C) Component is not particularly limited as long as (C) component is a granular body formed of an inorganic material.

Examples of the inorganic material include silica, talc, alumina, aluminum nitride, calcium carbonate, aluminum silicate, magnesium silicate, magnesium carbonate, barium sulfate, barium carbonate, calcium sulfate, aluminum hydroxide, calcium silicate, potassium titanate, titanium oxide, zinc oxide, silicon carbide, silicon nitride, boron nitride, and the like.

As (C) component, one type may be used alone, or two or more types may be used in combination.

It is preferable to use silica particles as (C) component from the viewpoint of refractive index.

Further, the silica is preferably amorphous silica.

(C) Component may have the surface treated with a coupling agent such as silane coupling agent from the viewpoint of preventing aggregation.

The shape of (C) component is not particularly limited, and may be any of spherical, flaky, needle-like, and irregular.

However, in the case of using a flaky or needle-like inorganic filler as a resin composition for optical adhesive, light may be scattered according to the disordered orientation of the inorganic filler. Therefore, from the viewpoint of refractive index and transmittance, the silica particles are preferably spherical, the sphericity is 0.8 or more, and more preferably the silica particles have a substantially spherical shape of 0.9 or more.

The average particle diameter of (C) component is preferably 5.0 μm or less, more preferably 3.0 μm or less, even more preferably 1.0 μm or less, and particularly preferably 0.5 μm or less.

In this specification, unless otherwise specified, the average particle diameter means a volume-based median diameter (D50) measured by the laser diffraction scattering method in accordance with ISO-13320 (2020).

By setting the average particle diameter of (C) component to the upper limit or less, transmittance can be increased.

The lower limit of the average particle diameter of (C) component is not particularly limited, but from the viewpoint of viscosity of the resin composition, the lower limit is preferably 0.1 μm or more, and more preferably 0.2 μm or more.

The average particle diameter of (C) component is preferably 0.1 μm to 5.0 μm, and more preferably 0.2 μm to 2.0 μm.

Inorganic fillers having different average particle diameters may be used in combination. For example, an inorganic filler having an average particle diameter of 0.1 μm or more and less than 0.5 μm and an inorganic filler having an average particle diameter of 0.5 μm to 5.0 μm may be used in combination.

In the case of using silica as the inorganic filler, the manufacturing method thereof is not particularly limited. For example, spherical silica powder obtained by reacting metallic silicon with oxygen, spherical silica powder obtained by

melting crushed silica, and silica fillers obtained by the sol-gel method, precipitation method, and aqueous solution wet method may be used. Among these, from the viewpoint of optical properties, silica particles obtained by the sol-gel method and having properties of high sphericity and relatively sharp particle size distribution, that is, sol-gel silica particles, are particularly preferable.

The content of (C) component in the resin composition of the present embodiment is preferably 0.1 parts by mass to 80 parts by mass, more preferably 5 parts by mass to 70 parts by mass, and even more preferably 10 parts by mass to 60 parts by mass, in the case of the total amount of the resin composition being 100 parts by mass.

By setting the content of (C) component within the above range, reflow resistance can be improved and the refractive index can be lowered.

(D) Oxetane Compound

The resin composition of the present embodiment may include (D) an oxetane compound (hereinafter also referred to as "(D) component") as an optional component.

(D) Component is not particularly limited as long as (D) component is a compound containing an oxetane ring.

By including (D) component in the resin composition, initial adhesion can be improved. However, it is preferable not to include compounds that may increase the refractive index of the resin composition, such as oxetane compounds having aromatic rings.

The blending ratio of (D) component is not particularly limited, but is preferably 1 part by mass to 5 parts by mass in the case of the total amount of the resin composition being 100 parts by mass.

Examples of the oxetane compound include 3,3'-(oxybismethylene)bis(3-ethyloxetane), 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, [1-(3-ethyl-3-oxetanylmethoxy)ethyl]phenyl ether, isobutoxymethyl(3-ethyl-3-oxetanylmethyl)ether, 2-ethylhexyl(3-ethyl-3-oxetanylmethyl)ether, ethyl diethylene glycol(3-ethyl-3-oxetanylmethyl)ether, tetrahydrofurfuryl(3-ethyl-3-oxetanylmethyl)ether, tetrabromophenyl(3-ethyl-3-oxetanylmethyl)ether, 2-tetrabromophenoxyethyl(3-ethyl-3-oxetanylmethyl)ether, pentachlorophenyl(3-ethyl-3-oxetanylmethyl)ether, pentabromophenyl(3-ethyl-3-oxetanylmethyl)ether, ethylene glycol bis(3-ethyl-3-oxetanylmethyl)ether, triethylene glycol bis(3-ethyl-3-oxetanylmethyl)ether, tetraethylene glycol bis(3-ethyl-3-oxetanylmethyl)ether, trimethylolpropane tris(3-ethyl-3-oxetanylmethyl)ether, pentaerythritol tris(3-ethyl-3-oxetanylmethyl)ether, pentaerythritol tetrakis(3-ethyl-3-oxetanylmethyl)ether, dipentaerythritol tetrakis(3-ethyl-3-oxetanylmethyl)ether, ditrimethylolpropane tetrakis(3-ethyl-3-oxetanylmethyl)ether, and the like, but are not limited thereto.

Examples of commercially available oxetane compounds include OXT-212, OX-221, OXT-213, OXT-101 (manufactured by Toagosei Co., Ltd.), and the like.

(E) Other Additives

The resin composition of the present embodiment may further contain other additives, such as coupling agent, stabilizer, ion trap agent, leveling agent, antioxidant, antifoaming agent, viscosity modifier, and solvent, as desired, within a range that does not impair the spirit of the present embodiment.

The content of each additive can be appropriately selected.

The method for manufacturing the resin composition of the present embodiment is not particularly limited. For example, the resin composition of the present embodiment can be obtained by simultaneously or separately introducing (A) component, (B) component, and optionally (C) component, (D) component, and (E) other additives into an appropriate mixer, and stirring and mixing while melting by heating, if needed, to form a uniform composition.

This mixer is not particularly limited, but a Raikai mixer, Henschel mixer, three-roll mill, ball mill, planetary mixer, bead mill, and the like equipped with a stirring device and a heating device can be used. These devices may also be used in appropriate combinations.

The resin composition thus obtained is photocurable and thermosetting.

[Viscosity of Resin Composition]

The viscosity of the resin composition of the present embodiment is not particularly limited and may be appropriately adjusted according to the applications.

For example, each component may be selected and the blending ratio may be appropriately adjusted so that the viscosity of the resin composition at 25°C is in the range of 0.01 Pa·s to 1,000 Pa·s.

In this specification, unless otherwise specified, viscosity is expressed as a value measured in accordance with Japanese Industrial Standard JIS K6833. Specifically, viscosity can be determined by measurement using an E-type viscometer at a rotation speed of 10 rpm.

From the viewpoint of improving injectability, the viscosity of the resin composition at 25°C is 0.05 Pa·s to 200 Pa·s, preferably 0.1 Pa·s to 100 Pa·s, more preferably 0.1 Pa·s to 50 Pa·s, and even more preferably 0.1 Pa·s to 20 Pa·s.
In the case of the viscosity of the resin composition being too low, the shape may not be maintained and the resin composition may flow during application. In the case of the viscosity of the resin composition being too high, injectability may deteriorate or unevenness may occur during application.
Additionally, the thixotropic index value (TI value) of the resin composition is preferably 0.5 to 3.0.
In this specification, the TI value is the ratio of viscosities at 5 rpm and 50 rpm measured at 25°C using an E-type viscometer, and is calculated as viscosity at 5 rpm/viscosity at 50 rpm.
The TI value is an index that represents thixotropic properties by measuring the dependency between shear rate (rotation speed of viscometer) and viscosity. The TI value of a Newtonian fluid such as water, whose viscosity does not change even if the shear rate changes, is 1. A TI value smaller than 1 indicates that a lower shear force results in a lower viscosity than a higher shear force, and a TI value larger than 1 indicates that a lower shear force results in a higher viscosity than a higher shear force. It represents that the larger the TI value, the more thixotropic the composition is.
In the case of the TI value being 0.5 to 3.0, workability during injection of the resin composition improves. The resin composition may have thixotropic properties close to a Newtonian fluid with a TI value of 0.8 to 1.2, or may have thixotropic properties of a non-Newtonian fluid with a thixotropic index exceeding 1.2.

[Cured Product of Resin Composition]

The resin composition of the present embodiment can be easily cured to form a cured product by irradiation with the above-described active energy ray, preferably light with a wavelength of 10 nm to 600 nm, more preferably ultraviolet light with a wavelength of 100 nm to 500 nm, even more preferably ultraviolet light with a wavelength of 250 nm to 450 nm, and particularly preferably ultraviolet light with a wavelength of 300 nm to 400 nm.
In the case of curing the resin composition of the present embodiment by irradiation of ultraviolet light, the irradiation amount (integrated light amount) of ultraviolet light to be used is preferably 500 $mJ/cm^2$ to 30,000 $mJ/cm^2$. The device used for ultraviolet light irradiation is not particularly limited, and for example, conventionally known devices can be used.

[Refractive Index, Transmittance, Reflow Resistance, and Weight Reduction Rate Before and After Heating of Cured Product]

(Refractive Index of Cured Product)

The resin composition of the present embodiment includes (A) a siloxane compound having a reactive functional group and (B) a polymerization initiator, wherein the (B) polymerization initiator includes at least one onium salt selected from the group consisting of onium borate salt and onium gallate salt, thereby achieving excellent optical properties and heat resistance when formed into a cured product.
Specifically, the cured product of the resin composition of the present embodiment has a low refractive index, high transparency, and a small weight reduction rate after the reflow process.
In the case of the resin composition including both (A1) a cyclic siloxane compound having a reactive functional group and (A2) a linear siloxane compound having a reactive functional group as (A) siloxane compound, the resin composition has excellent optical properties and heat resistance when formed into a cured product.
The cured product of the present embodiment has a refractive index of 1.49 or less at 25°C at a wavelength of 1310 nm and/or 589 nm, preferably 1.48 or less, more preferably 1.47 or less, even more preferably 1.46 or less, and 1.45 or less.
In the present embodiment, the range of the refractive index at 25°C at a wavelength of 1310 nm and/or 589 nm of the cured product is 1.40 or more and less than 1.49, preferably 1.41 or more and less than 1.49, more preferably 1.42 to 1.48, and even more preferably 1.43 to 1.47.
In this specification, unless otherwise specified, the refractive index is expressed as a value measured in accordance with JIS K7142:2014 Method A.

(Transmittance of Cured Product)

The cured product of the present embodiment preferably has a transmittance of 80% or more at 25°C at a thickness of 100 μm and a wavelength of 1310 nm and/or 589 nm, preferably 85% or more, more preferably 90% or more, and even more preferably 92% or more.
The range of the transmittance at 25°C at a thickness of 100 μm and a wavelength of 1310 nm and/or 589 nm of the cured product is 80% to 99%, preferably 85% to 95%, more preferably 87% to 95%, and even more preferably 90% to

95%.

(Reflow Resistance of Cured Product)

The cured product of the resin composition of the present embodiment excels in heat resistance and particularly excels in reflow resistance, and has a small weight reduction rate after the reflow process.

In this specification, reflow resistance refers to the property of being able to withstand thermal shock at a maximum temperature of 260°C for 1 minute. In other words, the cured product of the resin composition of the present embodiment has the property that the change in physical properties is small before and after the reflow process (maximum temperature of about 260°C) for soldering in the case of mounting electronic components.

For example, the resin composition of the present embodiment has the property that the change in adhesive strength is small before and after the reflow process in the case of being formed into a cured product.

The method for evaluating reflow resistance of the cured product of the resin composition can be realized by evaluating the reduction rate of evaluation adhesive strength.

The adhesive strength of the cured product is not particularly limited as long as the same method is used before and after the reflow process, but can be measured, for example, by performing die shear measurement.

The measurement method for die shear strength is as follows.

(1) Apply the resin composition (sample) on a glass substrate.
(2) Place a Si chip on the applied sample to form a test piece.
(3) Irradiate the test piece with UV from the glass substrate side to cure the sample.
(4) After photocuring the sample, promptly measure the die shear strength using a bond tester. This value is taken as the adhesive strength before reflow.
(5) Next, apply heat treatment to the test piece for 6 minutes. The heat treatment includes 1 set of 6 steps, each lasting 1 minute: heating from room temperature, 170°C, 160°C, 160°C, 260°C, 255°C, and cooling. This heat treatment is repeated for 3 sets. After the heat treatment, promptly measure the die shear strength in the same manner as before reflow. This value is taken as the adhesive strength after reflow.
(6) Calculate the reduction rate of adhesive strength before and after reflow process from the following formula (2).

[Formula 2]

$$\text{Reduction rate of adhesive strength before and after reflow process} = \left|100 - \frac{\text{adhesive strength after reflow}}{\text{adhesive strength before reflow}} \times 100\right| (\%) \quad (2).$$

The heat treatment in (5) above simulates the reflow process performed in the mounting process. The sample before heat treatment is indicated as "before reflow process" and the sample after heat treatment is indicated as "after reflow process".

The smaller the absolute value of the reduction rate of adhesive strength before and after reflow process represented by formula (2), the smaller the variation caused by heat treatment, which is preferable.

The cured product of the resin composition of the present embodiment has an absolute value of the reduction rate of adhesive strength before and after reflow process represented by the above formula (2) of 74% or less, preferably 65% or less, more preferably 55% or less, even more preferably 50% or less, and particularly preferably 40% or less. The lower limit of the absolute value of the reduction rate of adhesive strength is not particularly limited, but is, for example, 0% or more.

(Weight Reduction Rate of Cured Product Before and After Heating)

Furthermore, the cured product of the resin composition of the present embodiment has a small weight reduction rate before and after heating.

Specifically, the cured product of the resin composition of the present embodiment has an absolute value of the weight reduction rate before and after heating at 260°C represented by the following formula (1) of 16% or less.

[Formula 3]

$$\text{Weight reduction rate} = \left|\frac{\text{weight after heating} - \text{weight before heating}}{\text{weight before heating}} \times 100\right| (\%) \quad (1)$$

The method for evaluating the weight reduction rate of the cured product of the resin composition is not particularly limited as long as the same method is used before and after heating, but the weight reduction rate can be measured, for example, by the following method.

(1) Apply the resin composition (sample) on a glass substrate.
(2) Place a Si chip on the applied sample to form a test piece.
(3) Irradiate the test piece with UV from the glass substrate side to cure the sample.
(4) After photocuring the sample, measure the weight. This value is taken as the weight before heating.
(5) Next, apply heat treatment to the test piece. The heat treatment involves heating from room temperature to 260°C, holding for 6 minutes, and cooling. After heat treatment, promptly measure the weight in the same manner as before heating. This value is taken as the weight after heating.
(6) Calculate the reduction rate of adhesive strength before and after heating from the above formula (1).

The smaller the weight reduction rate before and after heating represented by formula (1), the smaller the variation caused by heat treatment, which is preferable.
The cured product of the resin composition of the present embodiment has an absolute value of the weight reduction rate before and after heating represented by the above formula (2) of 16% or less, preferably 15% or less, more preferably 13% or less, even more preferably 10% or less, and particularly preferably 5% or less. The lower limit of the absolute value of the weight reduction rate is not particularly limited, but is, for example, 0% or more.
The resin composition of the present embodiment can further reduce the weight reduction rate after the reflow process by combining (A) a siloxane compound having a reactive functional group and (B) a polymerization initiator selected from the group consisting of onium borate salt and onium gallate salt.

[Applications of Resin Composition]

The resin composition of the present embodiment has excellent optical properties and heat resistance, and therefore can be used for various applications, without being limited to an optical adhesive for bonding optical components.
For example, the resin composition of the present embodiment can be used as an adhesive or sealant for fixing, bonding, or protecting optical components, electronic components, or semiconductor components, or as a raw material thereof.
Examples of the optical components for which the resin composition of the present embodiment is used include optical fiber, fiber array, optical waveguide element, lens, filter, diffraction grating, and optical active element, but are not limited thereto.
Moreover, since the resin composition of the present embodiment excels in optical properties and heat resistance, the resin composition can be suitably used particularly as an optical adhesive for silicon photonics.
The resin composition of the present embodiment can be used to fix an optical fiber 10 to a groove portion (V-groove 33) formed in an optical waveguide element 30, and to realize optical path coupling of the optical fiber 10 to an optical waveguide 32 of the optical waveguide element 30, as described below.
Further, it is preferable to use the resin composition of the present embodiment to simultaneously perform fixing of the optical fiber 10 to the V-groove 33, which is a groove portion formed in the optical waveguide element 30, and optical path coupling of the optical fiber 10 to the optical waveguide 32 of the optical waveguide element 30.
For example, the resin composition of the present embodiment may be used in a method of fixing an optical fiber to a groove portion formed in an optical waveguide element, and a method of performing optical path coupling of the optical fiber to the optical waveguide element.
Moreover, the resin composition of the present embodiment can also be used in a method of simultaneously performing fixing of an optical fiber to a groove portion formed in an optical waveguide element, and optical path coupling of the optical fiber to the optical waveguide element.

[Optical Fiber Array]

It is preferable to use the resin composition of the present embodiment for bonding an optical fiber and an optical waveguide element.
Specifically, it is suitable to construct an optical fiber array 1 using the resin composition of the present embodiment.
As shown in FIG. 1 to FIG. 4, the optical fiber array 1 of the present embodiment includes an optical fiber 10 and an adhesive layer 20. The optical fiber 10 is covered with a coating 11 and is shown in the form of a ribbon fiber 12. In the optical fiber array 1, the optical fiber 10 is coupled by an optical path to the optical waveguide 32 of the optical waveguide element 30 by the adhesive layer 20.

As shown in FIG. 1 to FIG. 4, the optical fiber array 1 of the present embodiment has a substrate 31 in which the V-groove 33, which is a groove for accommodating the optical fiber 10, is formed, and a pressing plate 40 adhesively fixed to the surface of the optical fiber 10. The optical fiber 10 is adhesively fixed to the V-groove 33 by the adhesive layer 20 (FIG. 3, FIG. 4). Then, the adhesive layer 20 bonds the optical fiber 10 and the optical waveguide element 30 (FIG. 3), and bonds the substrate 31 accommodating the optical fiber 10 in the V-groove 33 and the pressing plate 40 (FIG. 4).
Further, the substrate 31 may be composed of, for example, glass, semiconductor, organic resin, or the like, and is preferably a semiconductor substrate.
Moreover, the substrate 31 has ball grid array electrodes (not shown) on one surface of the substrate. Providing ball grid array electrodes on one surface of the substrate can realize a large number of electrical interfaces at high density, making it possible to miniaturize silicon photonics devices. In addition, the ball grid array electrodes are arranged assuming that the ball grid array electrodes are to be mounted and fixed to another substrate or the like by a reflow process. Therefore, the adhesive layer in the optical fiber array of the present embodiment is required to have heat resistance so as to be able to withstand the temperature applied during reflow heating and time.
The adhesive layer 20 is formed using the resin composition of the present embodiment.
That is, the optical fiber array 1 of the present embodiment includes the optical fiber 10 and the adhesive layer 20. The optical fiber 10 is coupled by an optical path to the optical waveguide element 30 by the adhesive layer 20, and the adhesive layer 20 includes (A) a siloxane compound having a reactive functional group and (B) a polymerization initiator, wherein the (B) polymerization initiator includes at least one onium salt selected from the group consisting of onium borate salt and onium gallate salt.
In other words, the optical fiber array 1 of the present embodiment includes a resin composition including (A) a siloxane compound having a reactive functional group and (B) a polymerization initiator, wherein the (B) polymerization initiator includes at least one onium salt selected from the group consisting of onium borate salt and onium gallate salt; the optical fiber 10; and the optical waveguide element 30. The optical fiber 10 is coupled by an optical path to the optical waveguide element 30 by the resin composition.
In this case, the optical fiber array 1 has the substrate 31 in which the V-groove 33 for accommodating the optical fiber 10 is formed, and the pressing plate 40 adhesively fixed to the surface of the optical fiber 10. The optical fiber 10 is adhesively fixed to the V-groove 33 by the adhesive layer 20. The adhesive layer 20 bonds the optical fiber 10 and the optical waveguide element 30, and bonds the substrate 31 accommodating the optical fiber 10 in the V-groove 33 and the pressing plate 40.

[Optical Waveguide Module]

Further, it is preferable to construct an optical waveguide module 50 (optical waveguide device) using the optical fiber array 1 of the present embodiment (FIG. 1).
The optical waveguide module 50 of the present embodiment includes the above-described optical fiber array 1.
Specifically, the optical waveguide module 50 of the present embodiment includes the optical fiber array 1, the adhesive layer 20, and the optical waveguide element 30. The optical fiber array 1 is coupled by an optical path to the optical waveguide 32 of the optical waveguide element 30 by the adhesive layer 20.
The adhesive layer 20 is formed using the resin composition of the present embodiment.
The optical waveguide element 30 in the optical fiber array 1 and the optical waveguide module 50 of the present embodiment is not particularly limited as long as the optical waveguide element 30 is used in optical integrated circuits.
The optical waveguide module 50 of the present embodiment is incorporated as a silicon photonics device.

[Manufacturing Method of Optical Fiber Array]

The manufacturing method of the optical fiber array 1 of the present embodiment is a method for manufacturing the optical fiber array 1 in which the optical fiber 10 is coupled by an optical path to the optical waveguide element 30 by the adhesive layer 20, wherein the adhesive layer 20 is formed of a cured product of a resin composition including (A) a siloxane compound having a reactive functional group and (B) a polymerization initiator, wherein the (B) polymerization initiator includes at least one onium salt selected from the group consisting of onium borate salt and onium gallate salt.
In this case, the process of fixing the optical fiber 10 to the V-groove 33 which is a groove portion formed in the optical waveguide element 30 and the process of performing optical path coupling of the optical fiber 10 to the optical waveguide 32 of the optical waveguide element 30 may be performed separately. Further, in the manufacturing method of the optical fiber array 1 of the present embodiment, it is preferable to simultaneously perform the process of fixing the optical fiber 10 to the V-groove 33 which is a groove portion formed in the optical waveguide element 30 and the process of performing optical path coupling of the optical fiber 10 to the optical waveguide 32 of the optical waveguide element 30.
The method for fixing the optical fiber 10 to the optical waveguide element 30 is described below. Nevertheless, this fixing method is exemplary, and the disclosure can be implemented in various modified and improved forms based on

the knowledge of those skilled in the art.

First, the optical fiber 10 is fitted into the V-groove 33, and the end portion of the optical fiber 10 is brought into contact with the side surface on the optical waveguide 32 side. Here, accurate alignment is performed to reduce loss at the connection point between the optical fiber 10 and the optical waveguide 32.

Next, the pressing plate 40 is disposed on the optical fiber 10. Thereafter, the resin composition is dropped into the V-groove 33. The pressing plate 40 may be formed integrally with the substrate 31.

The resin composition dropped into the V-groove 33 penetrates into the gap between the optical fiber 10 and the V-groove 33 by capillary action, and also penetrates along the contact portion between the optical fiber 10 and the pressing plate 40, and penetrates into the gap between the optical fiber 10 and the optical waveguide 32. Therefore, the resin composition requires injectability to be able to penetrate into both the gap between the optical fiber 10 and the V-groove 33 and the gap between the optical fiber 10 and the optical waveguide 32, and the viscosity and TI value of the resin composition need to be set to appropriate values.

Next, by irradiating the resin composition with ultraviolet light to cure the adhesive composition (resin composition), the optical fiber 10 and the optical waveguide 32, the optical fiber 10 and the V-groove 33, and the optical fiber 10 and the pressing plate 40 are respectively bonded. A curing process using heat may be added after the curing process using ultraviolet light.

In other words, the adhesive layer 20 in the present embodiment can also play a role of performing optical path coupling of the optical fiber 10 to the optical waveguide 32 of the optical waveguide element 30, fixing the optical fiber 10 to the V-groove 33 which is a groove portion formed in the optical waveguide element 30, and fixing the optical fiber 10 and the pressing plate 40.

That is, the adhesive layer 20 in the present embodiment can perform both the adhesion for optical path coupling and the adhesion for V-groove fixing at once with a single adhesive layer.

The adhesive layer 20 does not necessarily perform these adhesions simultaneously, and may be used as an adhesive layer for optical path coupling of the optical fiber 10 to the optical waveguide 32 of the optical waveguide element 30, or may be used as an adhesive layer for V-groove fixing to fix the optical fiber 10 to the V-groove 33 which is a groove portion formed in the optical waveguide element 30.

[Method]

As shown in the examples described later, the resin composition of the present embodiment combines (A) a siloxane compound having a reactive functional group and (B) a polymerization initiator including at least one onium salt selected from the group consisting of onium borate salt and onium gallate salt, thereby achieving excellent optical properties and heat resistance when formed into a cured product.

Therefore, according to the present embodiment, a method is provided for reducing the refractive index of the cured product of the resin composition for an adhesive (adhesive composition), which includes a process of combining (A) a siloxane compound having a reactive functional group and (B) a polymerization initiator including at least one onium salt selected from the group consisting of onium borate salt and onium gallate salt.

Further, according to the present embodiment, a method is provided for improving the heat resistance before and after reflow process of the cured product of the resin composition for an adhesive (adhesive composition), which includes a process of combining (A) a siloxane compound having a reactive functional group and (B) a polymerization initiator including at least one onium salt selected from the group consisting of onium borate salt and onium gallate salt.

## Examples

Hereinafter, the present invention will be described in further detail based on examples and comparative examples, but the present invention is not limited to these examples. In the following examples, unless otherwise specified, parts and % indicate parts by mass and % by mass.

(Synthesis Example 1) Synthesis of lithium tetrakis(pentafluorophenyl)gallate

A 125 mL four-neck flask sufficiently dried under nitrogen atmosphere was charged with 500 mL of ultra-dehydrated diethyl ether and 30 g (121.46 mmol) of pentafluorobromobenzene, and this was cooled to -78°C using a dry ice/acetone bath. Next, 47.4 mL of 2.5 mol/L n-butyllithium hexane solution was dropped into the flask over 10 minutes, and stirred at -78°C for 30 minutes. 49.3 mL of 0.6 mol/L gallium(III) chloride diethyl ether solution was dropped into this over 10 minutes, and the reaction was carried out while stirring at -78°C for 3 hours. The reaction solution was stirred while gradually returning to room temperature, and stirred at room temperature for 5 hours. After filtering the reaction solution to remove precipitates, it was concentrated under reduced pressure to obtain a grayish white product. The product was washed with 30 mL of ultra-dehydrated hexane four times, then vacuum dried overnight to obtain lithium tetrakis(pentafluorophenyl)gallate.

(Synthesis Example 2)

To a 50 mL eggplant flask, 25 mL of dichloromethane, 1.69 g (5 mmol) of 4-isopropylphenyl(p-tolyl)iodonium chloride, and 4.4 g (6 mmol) of lithium tetrakis(pentafluorophenyl)gallate were added, and stirred at room temperature for 2 hours. After filtering the reaction solution to remove precipitates, it was concentrated under reduced pressure to obtain 4-isopropylphenyl(p-tolyl)iodonium tetrakis(pentafluorophenyl)gallate (B-2).

(Synthesis Example 3)

1.6 g (8 mmol) of diphenyl sulfoxide, 1.5 g (8 mmol) of diphenyl sulfide, 2.5 g (24 mmol) of acetic anhydride, 1.5 g (10 mmol) of trifluoromethanesulfonic acid, and 13 g of acetonitrile were uniformly mixed and reacted at 40°C for 6 hours. The reaction solution was cooled to room temperature, poured into 60 g of distilled water, extracted with 60 g of dichloromethane, and washed with water until the pH of the aqueous layer became neutral. The dichloromethane layer was concentrated under reduced pressure to obtain a brown liquid product. 20 g of ethyl acetate was added to the product and dissolved in a 60°C water bath, 60 g of hexane was added and stirred, then cooled to 5°C and allowed to stand for 30 minutes. Then, the operation of removing the supernatant was performed twice to wash the product. The solution containing the washed product was concentrated under reduced pressure to obtain diphenyl[4-(phenylthio)phenyl] sulfonium triflate.

This triflate was dissolved in 50 g of dichloromethane, mixed with 66 g of an aqueous solution containing an equimolar amount of lithium tetrakis(pentafluorophenyl)gallate, and reacted at room temperature for 3 hours. After washing the dichloromethane layer of the reaction solution with water twice, it was concentrated under reduced pressure to obtain diphenyl[4-(phenylthio)phenyl]sulfonium tetrakis(pentafluorophenyl)gallate (B-3).

[Examples 1 to 14, Comparative Examples 1 and 2]

Resin compositions were prepared by mixing predetermined amounts of the components using a three-roll mill according to the formulations shown in Tables 1 to 3. In Tables 1 to 3, the amount of each component is expressed in parts by mass (unit: g). The components used in the examples and comparative examples are as follows.

· (A1) Cyclic siloxane compound ((A1) component)

(A1-1) KR-470 represented by the following formula (manufactured by Shin-Etsu Chemical Co., Ltd., alicyclic epoxy group, number of epoxy functional groups: 4, viscosity at 25°C: 3 Pa·s, epoxy equivalent: 200 g/mol)

[Chemical Formula 7]

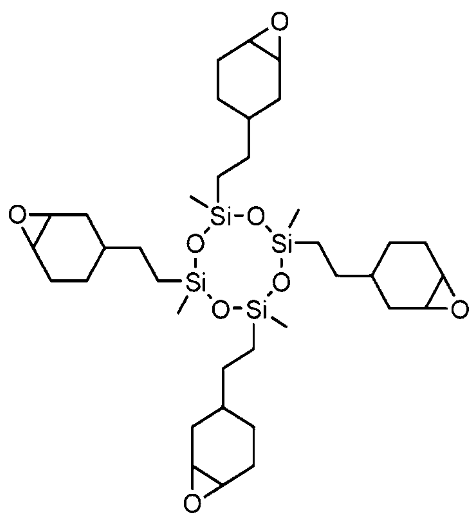

(A1-2) X-40-2728 represented by the following formula (R is an alkyl group) (manufactured by Shin-Etsu Chemical

Co., Ltd., non-alicyclic epoxy group, number of epoxy functional groups: 2, viscosity at 25°C: 26 mPa·s, epoxy equivalent: 280 g/mol)

[Chemical Formula 8]

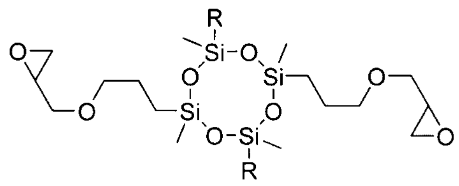

(A1-3) X-40-2678 represented by the following formula (manufactured by Shin-Etsu Chemical Co., Ltd., alicyclic epoxy group, number of epoxy functional groups: 2, viscosity at 25°C: 120 Pa·s, epoxy equivalent: 290 g/mol)

[Chemical Formula 9]

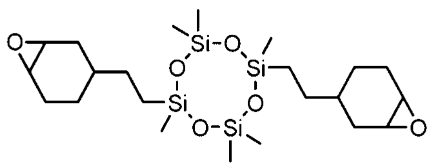

· (A2) Linear siloxane compound ((A2) component)

(A2-1) Modified silicone oil having alicyclic epoxy groups at both ends, represented by the following formula (product name: X-22-169AS, manufactured by Shin-Etsu Chemical Co., Ltd., alicyclic epoxy group, number average molecular weight: 1,000, viscosity at 25°C: 25 Pa·s, epoxy equivalent: 500 g/mol)

[Chemical Formula 10]

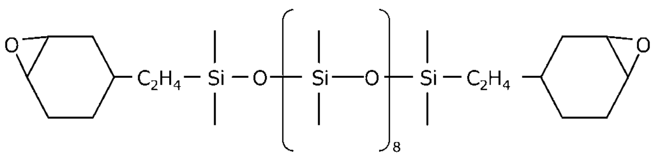

(A2-2) Modified silicone oil having epoxy groups (glycidyl ether structure) at both ends, represented by the following formula (m=0, $R^a$=methyl group, $R^b$=organic group having epoxy group) (product name: KF-105, manufactured by Shin-Etsu Chemical Co., Ltd., non-alicyclic epoxy group, number average molecular weight: 980, viscosity at 25°C: 15 Pa·s, epoxy equivalent: 490 g/mol)

[Chemical Formula 11]

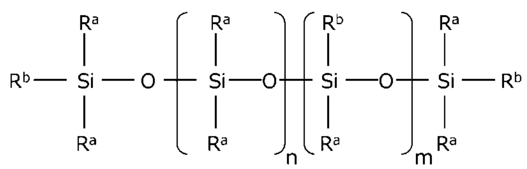

· (B) Polymerization initiator ((B) component)

(B-1) As onium borate salt, 4-isopropyl-4'-methyldiphenyliodonium tetrakis(pentafluorophenyl)borate (product name: PI2074, manufactured by Elkem)
(B-2) Onium gallate salt of Synthesis Example 2
(B-3) Onium gallate salt of Synthesis Example 3
· (B') Polymerization initiator (for comparative example, not onium salt)
(B-X) Bis[4-n-alkyl(C10 to 13)phenyl]iodonium hexafluorophosphate

· (C) Inorganic particles ((C) component)

(C-1) Spherical silica particles (product name: KE-S30HG, manufactured by Nippon Shokubai Co., Ltd., D50: 0.3 μm, true spherical sol-gel silica particles)

· (D) Oxetane compound ((D) component)

(D-1) 3,3'-(oxybismethylene)bis(3-ethyloxetane) (product name: OXT-221, manufactured by Toagosei Co., Ltd.)

· (X) Epoxy compound

(X-1) Alicyclic epoxy (product name: 2021P, manufactured by Daicel Chemical Industries, Ltd.)

[Evaluation of Properties]

In the examples and comparative examples, the viscosity of the resin composition and the properties of the cured product obtained by curing the resin composition (refractive index, transmittance, adhesive strength, strength reduction rate before and after reflow, yellowing after reflow, and weight reduction rate) were measured as follows.

(Viscosity of Resin Composition)

Using an E-type viscometer manufactured by Toki Sangyo Co., Ltd. (model number: TVE-22H, rotor name: 1°34'×R24) (set to an appropriate measurement range (H, R, or U)), the viscosity of the resin composition was measured within 1 hour from preparation at 25°C with a rotor rotation speed of 10 rpm, and the value was read 1 minute after the start of measurement.

(Curing of Resin Composition)

The curing conditions were UV irradiation using a UV irradiation machine with a metal halide lamp light source at a peak wavelength of 365 nm and an integrated light amount of 30,000 mJ/cm$^2$, followed by drying in a dryer at 120°C for 60 minutes.

(Refractive Index)

The refractive index at 589 nm of a cured film with a thickness of 100 μm prepared from the resin composition was measured using an Abbe refractometer (NAR-2T, manufactured by ATAGO Co., Ltd.). Further, the refractive index at 1310 nm of a cured product of the resin composition prepared by film formation on a glass substrate was measured using a spectroscopic ellipsometer (SE-2000, manufactured by Semilab).

(Transmittance)

The transmittance of a cured product with a thickness of 100 μm prepared from the resin composition was measured at measurement wavelengths of 589 nm and 1310 nm using an ultraviolet-visible spectrophotometer (V-670, manufactured by JASCO Corporation).

(Reflow Resistance)

The adhesive strength of the cured product of the resin composition was measured by performing die shear measurement.
The measurement method for die shear strength is as follows.

(1) The prepared resin composition (sample) was applied as an adhesive on a glass substrate. The size of application was 1.5 mm length × 1.5 mm width × 0.5 mm thickness.
(2) A 2 $mm^2$ Si chip was placed on the applied sample to form a test piece.
(3) The test piece was irradiated with UV from the glass substrate side under the above curing conditions to cure the sample.
(4) After photocuring the sample, die shear strength was promptly measured using a universal bond tester (Series 4000, manufactured by Dage). This value was taken as the adhesive strength before reflow.
(5) Next, heat treatment was applied to the test piece for 6 minutes. The heat treatment included 1 set of 6 steps, each lasting 1 minute: heating from room temperature, 170°C, 160°C, 160°C, 260°C, 255°C, and cooling. This heat treatment was repeated for 3 sets. After the heat treatment, die shear strength was promptly measured in the same manner as before reflow. This value was taken as the adhesive strength after reflow.
(6) The reduction rate of adhesive strength before and after reflow process was calculated from the following formula (2).

[Formula 4]

$$Reduction\ rate\ of\ adhesive\ strength\ before\ and\ after\ reflow\ process = \left|100 - \frac{adhesive\ strength\ after\ reflow}{adhesive\ strength\ before\ reflow} \times 100\right| (\%)\ \ (2).$$

(Weight Reduction Rate))

The weight reduction rate of the cured product of the resin composition before and after heating was measured by the following method.

(1) The resin composition (sample) was applied on a glass substrate. The size of application was 1.5 mm length × 1.5 mm width × 0.5 mm thickness.
(2) A 2 $mm^2$ Si chip was placed on the applied sample to form a test piece.
(3) The test piece was irradiated with UV from the glass substrate side to cure the sample.
(4) After photocuring the sample, the weight was measured. This value was taken as the weight before heating.
(5) Next, heat treatment was applied to the test piece. The heat treatment involved heating from room temperature to 260°C, holding for 6 minutes, and then cooling. After the heat treatment, the weight was promptly measured in the same manner as before heating. This value was taken as the weight after heating.
(6) The weight reduction rate before and after heating was calculated from the following formula (1).

[Formula 5]

$$Weight\ reduction\ rate = \left|\frac{weight\ after\ heating - weight\ before\ heating}{weight\ before\ heating} \times 100\right| (\%)\ \ (1)$$

(Yellowing After Reflow)

The transmittance of the cured product with a thickness of 100 μm after reflow was measured using an ultraviolet-visible spectrophotometer (manufactured by JASCO Corporation, V-670) at measurement wavelengths of 589 nm and 1310 nm.

[Table 1]

| | | Example 1 | Example 2 | Example 3 | Example 4 | Example 5 | Example 6 |
|---|---|---|---|---|---|---|---|
| (A1) Cyclic siloxane compound | Al-1 | 5.5 | 9.3 | 14.3 | 6.0 | 2.0 | 2.1 |
| | A1-2 | - | - | - | - | - | - |
| | A1-3 | - | - | - | - | - | - |

(continued)

| | | Example 1 | Example 2 | Example 3 | Example 4 | Example 5 | Example 6 |
|---|---|---|---|---|---|---|---|
| (A2) Linear siloxane compound | A2-1 | 27.5 | 23.3 | 17.9 | 30.0 | 35.0 | 35.0 |
| | A2-2 | - | - | - | - | - | - |
| (B) Polymerization initiator | B-1 | 4.0 | 4.0 | 4.0 | 4.0 | 2.0 | 1.1 |
| | B-2 | - | - | - | - | - | - |
| | B-3 | - | - | - | - | - | - |
| (C) Inorganic particles | C-1 | 60.0 | 60.0 | 60.0 | 60.0 | 61.0 | 61.8 |
| (D) Oxetane compound | D-1 | 2.95 | 3.33 | 3.82 | 0 | 0 | 0 |
| Total | | 100.0 | 100.0 | 100.0 | 100.0 | 100.0 | 100.0 |
| Viscosity [Pa·s] | | 2.2 | 3.3 | 3.6 | 5.9 | 0.9 | 1.3 |
| Refractive index | 589 nm | 1.453 | 1.466 | 1.469 | 1.456 | 1.446 | 1.452 |
| | 1310 nm | 1.448 | 1.450 | 1.465 | 1.451 | 1.443 | 1.449 |
| Transmittance [%] | 589 nm | 91.0 | 91.3 | 87.3 | 90.4 | 86.6 | 92.9 |
| | 1310 nm | 93.6 | 94.3 | 92.9 | 93.7 | 93.0 | 94.0 |
| Adhesive strength [N/mm$^2$] | Before reflow | 12.3 | 13.9 | 16.7 | 8.0 | 7.1 | 8.4 |
| | After reflow | 5.1 | 9.9 | 13.2 | 6.6 | 3.6 | 3.8 |
| Reduction rate of adhesive strength before and after reflow process [%] | | 58.5 | 28.6 | 21.0 | 17.5 | 49.3 | 54.6 |
| Yellowing after reflow | 589 nm | 43.3 | 42.9 | 38.5 | 43.1 | 40.9 | 69.3 |
| (Transmittance [%]) | 1310 nm | 72.2 | 72.7 | 64.8 | 72.2 | 81.7 | 92.8 |
| Weight reduction rate (Heat resistance) | Weight reduction rate at 250°C | 15.2 | 14.6 | 12.6 | 15.8 | 10.7 | 9.4 |

[Table 2]

| | | Example 7 | Example 8 | Example 9 | Example 10 | Example 11 | Example 12 |
|---|---|---|---|---|---|---|---|
| (A1) Cyclic siloxane compound | A1-1 | - | - | - | - | - | - |
| | A1-2 | 14.0 | 14.0 | 14.0 | 14.0 | 12.4 | 14.2 |
| | A1-3 | - | - | - | - | - | - |
| (A2) Linear siloxane compound | A2-1 | 24.9 | 24.9 | - | 24.9 | 22.1 | 25.3 |
| | A2-2 | - | - | 24.9 | - | - | - |
| (B) Polymerization initiator | B-1 | 1.1 | - | - | - | - | - |
| | B-2 | - | 1.1 | 1.1 | - | 5.5 | 0.6 |
| | B-3 | - | - | - | 1.1 | - | - |
| (C) Inorganic particles | C-1 | 60.0 | 60.0 | 60.0 | 60.0 | 60.0 | 60.0 |

(continued)

| | | Example 7 | Example 8 | Example 9 | Example 10 | Example 11 | Example 12 |
|---|---|---|---|---|---|---|---|
| (D) Oxetane compound | D-1 | 0 | 0 | 0 | 0 | 0 | 0 |
| Total | | 100.0 | 100.0 | 100.0 | 100.0 | 100.0 | 100.0 |
| Viscosity [Pa·s] | | 0.4 | 0.4 | 0.3 | 0.3 | 1.2 | 0.6 |
| Refractive index | 589 nm | 1.453 | 1.453 | 1.451 | 1.453 | 1.454 | 1.451 |
| | 1310 nm | 1.450 | 1.449 | 1.448 | 1.450 | 1.451 | 1.449 |
| Transmittance [%] | 589 nm | 93.1 | 93.1 | 93.8 | 93.1 | 83.3 | 84.3 |
| | 1310 nm | 94.7 | 94.8 | 94.9 | 94.8 | 85.9 | 86.8 |
| Adhesive strength [N/mm$^2$] | Before reflow | 6.4 | 5.5 | 5.3 | 8.0 | 7.3 | 5.3 |
| | After reflow | 7.2 | 6.1 | 5.8 | 4.1 | 4.1 | 2.2 |
| Reduction rate of adhesive strength before and after reflow process [%] | | 12.7 | 11.6 | 9.4 | 49.3 | 43.3 | 59.1 |
| Yellowing after reflow (Transmittance [%]) | 589 nm | 69.0 | 92.7 | 92.1 | 92.5 | 60.2 | 62.9 |
| | 1310 nm | 93.5 | 94.5 | 94.3 | 94.4 | 63.3 | 64.4 |
| Weight reduction rate (Heat resistance) | Weight reduction rate at 250°C | -9.7 | -1.4 | -1.8 | -1.4 | -4.3 | -5.2 |

[Table 3]

| | | Example 13 | Example 14 | Comparative Example 1 | Comparative Example 2 |
|---|---|---|---|---|---|
| (X) Epoxy resin | X-1 | - | - | - | 38.9 |
| (A1) Cyclic siloxane compound | A1-1 | - | - | 13.3 | - |
| | A1-2 | 30.9 | - | - | - |
| | A1-3 | - | 14.0 | - | - |
| (A2) Linear siloxane compound | A2-1 | 66.3 | 24.9 | 23.7 | - |
| | A2-2 | - | - | - | - |
| (B) Polymerization initiator | B-1 | - | - | - | - |
| | B-2 | 2.8 | 1.1 | - | 1.1 |
| | B-3 | - | - | - | - |
| (B') Polymerization initiator For comparative example | B-X | - | - | 4.0 | - |
| (C) Inorganic particles | C-1 | 0.0 | 60.0 | 59.0 | 60.0 |
| (D) Oxetane compound | D-1 | 0 | 0 | 0 | 0 |
| Total | | 100.0 | 100.0 | 100.0 | 100.0 |
| Viscosity [Pa·s] | | 0.2 | 0.4 | 0.4 | 4.8 |
| Refractive index | 589 nm | 1.486 | 1.454 | 1.456 | 1.491 |
| | 1310 nm | 1.484 | 1.452 | 1.452 | 1.486 |
| Transmittance [%] | 589 nm | 89.9 | 93.1 | 92.1 | 82.3 |
| | 1310 nm | 94.3 | 94.7 | 93.5 | 86.4 |

(continued)

| | | Example 13 | Example 14 | Comparative Example 1 | Comparative Example 2 |
|---|---|---|---|---|---|
| Adhesive strength [N/mm$^2$] | Before reflow | 7.9 | 5.1 | 7.4 | 21.4 |
| | After reflow | 3.2 | 5.6 | 3.4 | 14.3 |
| Reduction rate of adhesive strength before and after reflow process [%] | | 59.4 | -10.8 | 54.0 | 33.2 |
| Yellowing after reflow (Transmittance [%]) | 589 nm | 90.7 | 92.0 | 41.1 | 67.3 |
| | 1310 nm | 92.5 | 93.6 | 65.1 | 46.4 |
| Weight reduction rate (Heat resistance) | Weight reduction rate at 250°C | 1.9 | 1.4 | 18.6 | 11.4 |

[Results]

As can be understood from Table 1 to Table 3, the resin composition including (A) a siloxane compound having a reactive functional group and (B) a polymerization initiator, wherein the (B) polymerization initiator includes at least one onium salt selected from the group consisting of onium borate salt and onium gallate salt, had a low refractive index, suppressed weight reduction rate even at high temperatures, and excelled in heat resistance.

Specifically, the cured products of the resin compositions of Examples 1 to 14 had a low refractive index at 25°C at wavelengths of 1310 nm and 589 nm, and excellent heat resistance with an absolute value of the weight reduction rate before and after heating at 260°C of 16% or less.

Further, it was found that the resin compositions of Examples 1 to 14 had excellent injectability because of low viscosity.

Additionally, it was found that the cured products of the resin compositions of Examples 1 to 14 had excellent transparency because of high transmittance.

From the comparison of Examples 1 to 3, it can be understood that the refractive index and heat resistance can be adjusted by adjusting the blending ratio of (A1) cyclic siloxane compound and (A2) linear siloxane compound. Increasing the ratio of (A1) cyclic siloxane compound improved the heat resistance, and increasing the ratio of (A2) linear siloxane compound lowered the refractive index.

From the comparison of Examples 1 to 3 and Examples 4 to 6, it can be understood that including (D) oxetane compound increased the adhesive strength before reflow.

From the comparison of Examples 6, 7 to 9, and 13, it can be understood that the refractive index was low and the heat resistance was excellent regardless of the type of (A1) cyclic siloxane compound (type of functional group or number of functional groups).

From the comparison of Examples 7 to 10, it can be understood that the refractive index was low and the heat resistance was excellent regardless of the type of (B) polymerization initiator.

From the comparison of Examples 7 to 10, it can be understood that in the case of (B) polymerization initiator being onium gallate salt, the heat resistance was better than in the case of onium borate salt.

From the comparison of Examples 4 to 6, it can be understood that a smaller content of (B) polymerization initiator, relative to (A) siloxane compound having a reactive functional group, achieved better heat resistance.

The resin compositions of Examples 1 to 14 had a transmittance of 63% or more at 1310 nm after reflow, and yellowing was suppressed.

From Example 13, it can be understood that even in the case of not including (C) inorganic filler, the refractive index was low and the heat resistance was excellent.

Comparative Example 1 had (B) polymerization initiator that was not onium salt, but the absolute value of the weight reduction rate before and after heating at 260°C was 18.6%, showing inferior heat resistance.

Comparative Example 2 did not include (A) siloxane compound having a reactive functional group, but the refractive index was high.

Further, upon comparison between Comparative Example 2 and Example 8, Example 8 using a siloxane compound having a reactive functional group as (A) component had a smaller weight reduction rate than Comparative Example 2 using alicyclic epoxy. That is, it can be understood that combining (A) siloxane compound having a reactive functional group and (B) polymerization initiator can further reduce the weight reduction rate after a reflow process.

Industrial Applicability

The resin composition of the present invention has a low refractive index, a small weight reduction rate after a reflow process, and good heat resistance, and therefore is useful as an adhesive and is particularly useful as an adhesive for optical components. Furthermore, the resin composition of the present invention can achieve a low refractive index without including a fluorine compound, and therefore is also useful as an optical adhesive from an environmental perspective.

Description of Reference Numerals

1 optical fiber array
10 optical fiber
11 coating
12 ribbon fiber
20 adhesive layer
30 optical waveguide element

31 substrate
32 optical waveguide
33 V-groove (groove portion)

40 pressing plate
50 optical waveguide module (optical waveguide device)

## Claims

1. A resin composition for an adhesive, the resin composition comprising:

(A) a siloxane compound having a reactive functional group; and
(B) a polymerization initiator,

wherein the (B) polymerization initiator comprises at least one onium salt selected from the group consisting of onium borate salt and onium gallate salt.

2. The resin composition according to claim 1, wherein the onium salt comprises at least one cation selected from the group consisting of iodonium and sulfonium.

3. The resin composition according to claim 1 or 2, wherein the onium gallate salt is an onium salt represented by the following general formula (1),

[Chemical Formula 1]

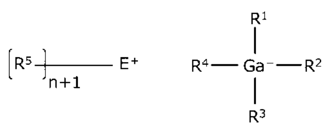

(1)

[in general formula (1), $R^1$ to $R^4$ each independently represent an alkyl group having 1 to 18 carbon atoms, an aryl group, or a group having a heterocycle, at least one of $R^1$ to $R^4$ is an aryl group, the number of carbon atoms in the aryl group (excluding the number of carbon atoms in substituents) is 6 to 14, and the aryl group may have a substituent,
E represents an element of valence n from Group 15 to Group 17 (IUPAC notation),
n is an integer of 1 to 3,
$R^5$ is an organic group bonded to E, the number of $R^5$ is n+1, the (n+1) $R^5$ may be the same as or different from

each other, and 2 or more $R^5$ may form a ring structure including element E directly with each other or through -O-, -S-, -SO-, $-SO_2-$, -NH-, -CO-, -COO-, -CONH-, an alkylene group, or a phenylene group].

**4.** The resin composition according to claim 1 or 2, wherein the onium borate salt is an onium salt represented by the following general formula (2),

[Chemical Formula 2]

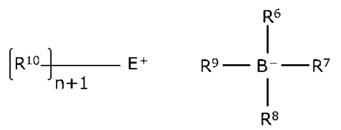 (2)

[in general formula (2), $R^6$ to $R^9$ are each independently an alkyl group having 1 to 18 carbon atoms or Ar, provided that at least one is Ar, and Ar is an aryl group having 6 to 14 carbon atoms (not including the number of carbon atoms of the following substituents), wherein some of hydrogen atoms in the aryl group may be substituted with an alkyl group having 1 to 18 carbon atoms, an alkyl group having 1 to 8 carbon atoms substituted with halogen atoms, an alkenyl group having 2 to 18 carbon atoms, an alkynyl group having 2 to 18 carbon atoms, an aryl group having 6 to 14 carbon atoms, a nitro group, a hydroxyl group, a cyano group, an alkoxy group or aryloxy group represented by $-OR^{11}$, an acyl group represented by $R^{12}CO-$, an acyloxy group represented by $R^{13}COO-$, an alkylthio group or arylthio group represented by $-SR^{14}$, an amino group represented by $-NR^{15}R^{16}$, or a halogen atom,
$R^{11}$ to $R^{14}$ are an alkyl group having 1 to 8 carbon atoms or an aryl group having 6 to 14 carbon atoms,
$R^{15}$ and $R^{16}$ are a hydrogen atom, an alkyl group having 1 to 8 carbon atoms, or an aryl group having 6 to 14 carbon atoms;
E represents an element of valence n from Group 15 to Group 17 (IUPAC notation),
n is an integer of 1 to 3,
$R^{10}$ is an organic group bonded to E, the number of $R^{10}$ is n+1, the (n+1) $R^{10}$ may be the same as or different from each other, and 2 or more $R^{10}$ may form a ring structure including element E directly with each other or through -O-, -S-, -SO-, $-SO_2-$, -NH-, -CO-, -COO-, -CONH-, an alkylene group, or a phenylene group].

**5.** The resin composition according to any one of claims 1 to 4, wherein the (B) polymerization initiator has a content of 0.3 parts by mass to 20.0 parts by mass relative to 100 parts by mass of the (A) siloxane compound having a reactive functional group.

**6.** The resin composition according to any one of claims 1 to 5, wherein the (A) siloxane compound having a reactive functional group comprises (A1) a cyclic siloxane compound having a reactive functional group and (A2) a linear siloxane compound having a reactive functional group.

**7.** The resin composition according to any one of claims 1 to 6, further comprising (C) an inorganic filler.

**8.** The resin composition according to any one of claims 1 to 7, further comprising (D) oxetane.

**9.** A cured product of the resin composition according to any one of claims 1 to 8.

**10.** The cured product according to claim 9, wherein a refractive index at a wavelength of 1310 nm is 1.47 or less.

**11.** The cured product according to claim 9 or 10, wherein a transmittance of the cured product at a thickness of 100 μm and a wavelength of 1310 nm is 85% or more.

**12.** The cured product according to any one of claims 9 to 11, wherein an absolute value of a weight reduction rate before and after heating at 260°C represented by the following formula (1) is 16% or less,

[Formula 1]

$$Weight\ reduction\ rate = \left|\frac{weight\ after\ heating - weight\ before\ heating}{weight\ before\ heating} \times 100\right| (\%) \quad (1)\ .$$

**13.** The resin composition according to any one of claims 1 to 8, used for fixing an optical fiber to a groove portion formed in an optical waveguide element.

**14.** The resin composition according to any one of claims 1 to 8, used for optical path coupling of an optical fiber to an optical waveguide element.

**15.** The resin composition according to any one of claims 1 to 8, used for simultaneously performing fixing of an optical fiber to a groove portion formed in an optical waveguide element and optical path coupling of the optical fiber to the optical waveguide element.

**16.** An optical fiber array, comprising:

the resin composition according to any one of claims 1 to 15;
an optical fiber; and
an optical waveguide element,
wherein the optical fiber is coupled by an optical path to the optical waveguide element by the resin composition.

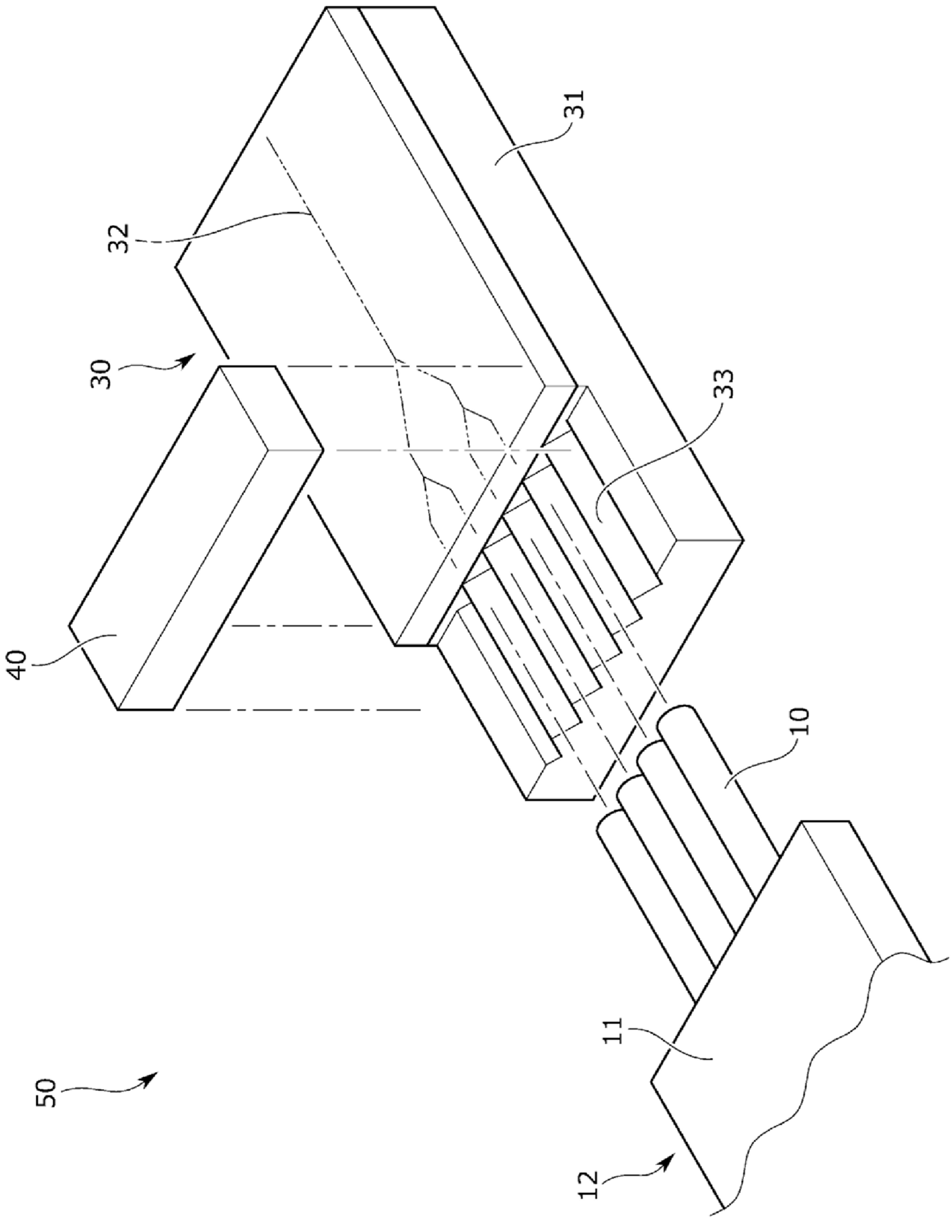


FIG. 1

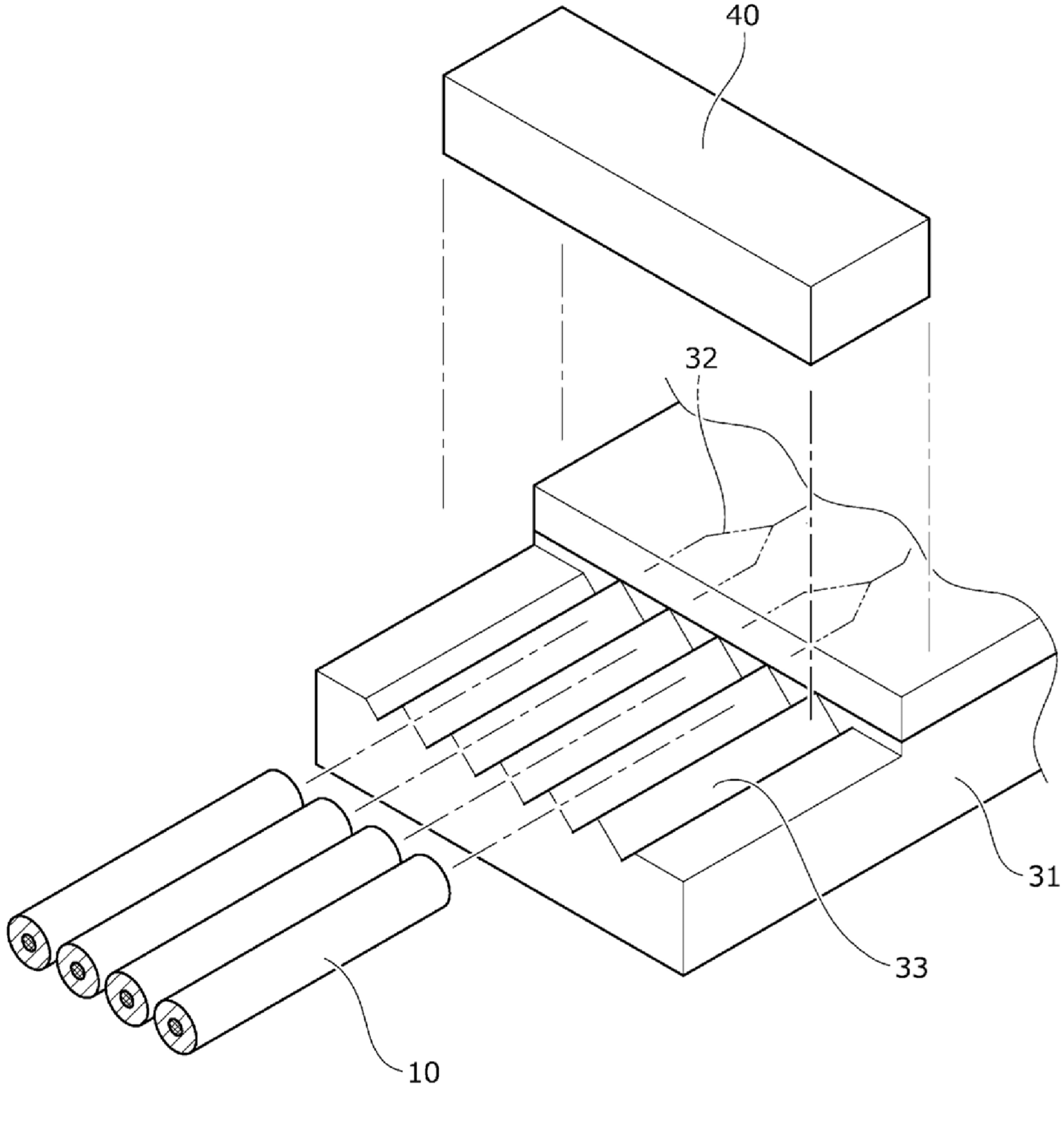


FIG. 2

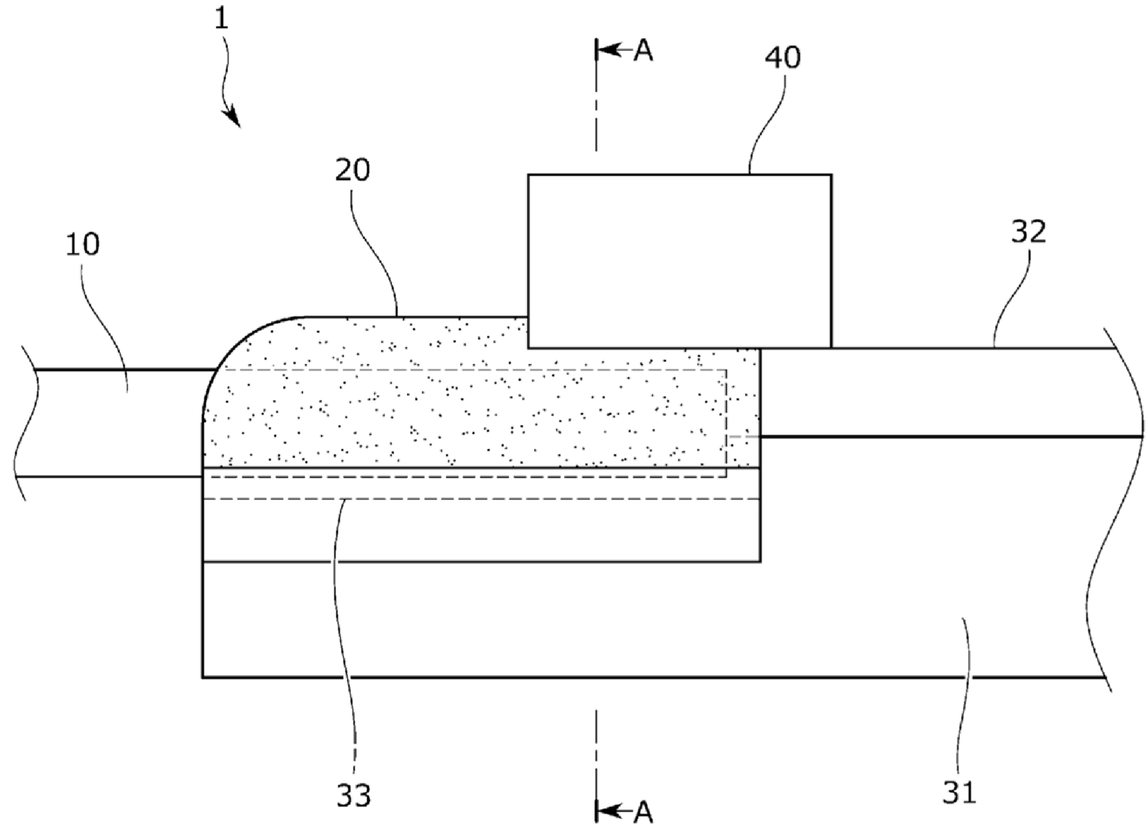


FIG. 3

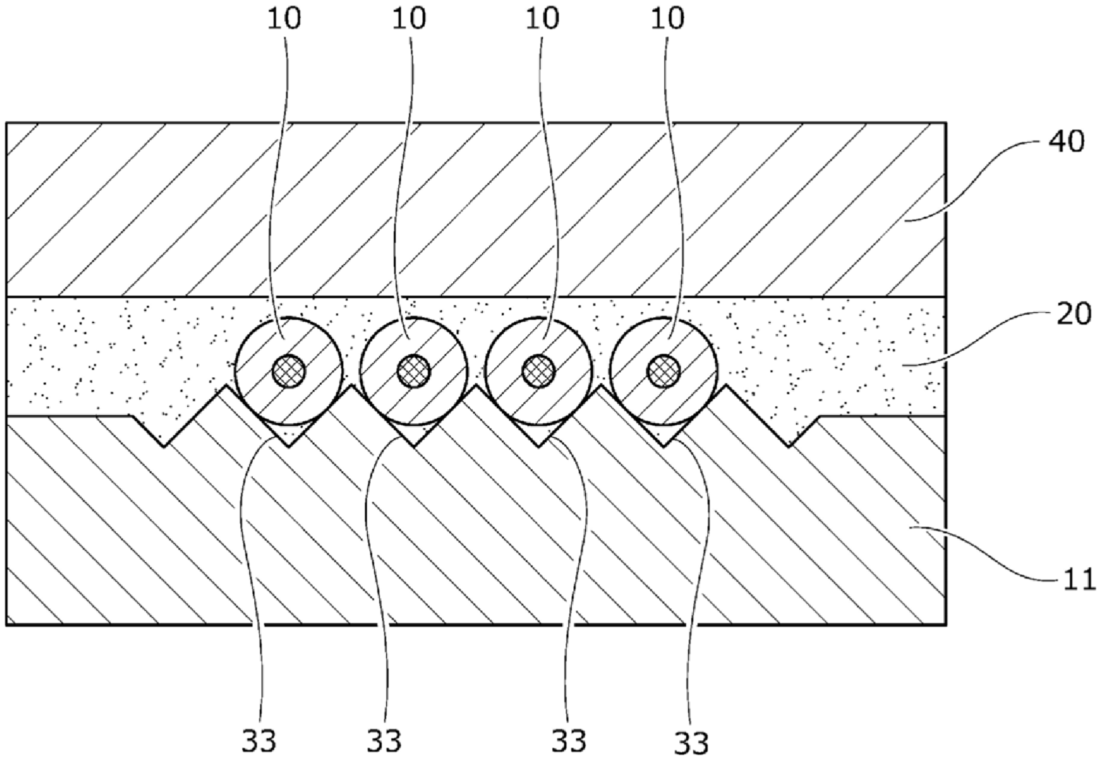


FIG. 4

**INTERNATIONAL SEARCH REPORT**

International application No.
**PCT/JP2024/034042**

**A. CLASSIFICATION OF SUBJECT MATTER**

***C08G 59/20***(2006.01)i; ***C08G 59/68***(2006.01)i; ***C09J 11/04***(2006.01)i; ***C09J 11/06***(2006.01)i; ***C09J 163/00***(2006.01)i; ***C09J 183/04***(2006.01)i; ***G02B 6/24***(2006.01)i; ***G02B 6/30***(2006.01)i
FI: C08G59/20; C08G59/68; C09J183/04; C09J11/06; C09J163/00; C09J11/04; G02B6/24; G02B6/30

According to International Patent Classification (IPC) or to both national classification and IPC

**B. FIELDS SEARCHED**

Minimum documentation searched (classification system followed by classification symbols)

C08G59/20; C08G59/68; C09J11/04; C09J11/06; C09J163/00; C09J183/04; G02B6/24; G02B6/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-196977 A (KYORITSU KAGAKU SANGYO KK) 15 July 2004 (2004-07-15) claims, paragraph [0056], examples | 1, 2, 4-12 |
| Y | | 3 |
| A | | 13-16 |
| X | JP 2019-182964 A (THREE BOND CO., LTD.) 24 October 2019 (2019-10-24) claims, paragraphs [0020], [0029], examples | 1, 2, 4, 5, 7-12 |
| Y | | 3 |
| A | | 6, 13-16 |
| X | JP 2005-093844 A (NITTO DENKO CORP.) 07 April 2005 (2005-04-07) claims, examples | 1, 2, 4, 5, 9-12 |
| Y | | 3 |
| A | | 6-8, 13-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/034042**

**C. DOCUMENTS CONSIDERED TO BE RELEVANT**

| Category* | Citation of document, with indication, where appropriate, of the relevant passages | Relevant to claim No. |
|---|---|---|
| X | JP 2008-201998 A (SHIN ETSU CHEM CO., LTD.) 04 September 2008 (2008-09-04) claims, examples | 1, 4, 5, 7, 9-12 |
| Y | | 3 |
| A | | 2, 6, 8, 13-16 |
| X | JP 2008-277421 A (SHIN ETSU CHEM CO., LTD.) 13 November 2008 (2008-11-13) claims, examples | 1, 4, 5, 7, 9-12 |
| Y | | 3 |
| A | | 2, 6, 8, 13-16 |
| Y | JP 2019-065175 A (TOKYO OHKA KOGYO CO., LTD.) 25 April 2019 (2019-04-25) claims, paragraphs [0023], [0024], [0087]-[0089], [0150]-[0159], examples | 3 |

Form PCT/ISA/210 (second sheet) (July 2022)

**INTERNATIONAL SEARCH REPORT**
**Information on patent family members**

International application No.
**PCT/JP2024/034042**

| Patent document cited in search report | Publication date (day/month/year) | Patent family member(s) | Publication date (day/month/year) |
|---|---|---|---|
| JP 2004-196977 A | 15 July 2004 | (Family: none) | |
| JP 2019-182964 A | 24 October 2019 | (Family: none) | |
| JP 2005-093844 A | 07 April 2005 | (Family: none) | |
| JP 2008-201998 A | 04 September 2008 | (Family: none) | |
| JP 2008-277421 A | 13 November 2008 | US 2008/0265439 A1<br>claims, examples | |
| JP 2019-065175 A | 25 April 2019 | CN 109581813 A<br>KR 10-2019-0038434 A<br>TW 201925258 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011037978 A
- JP 2017061599 A
- JP 2014205624 A